# EUROPEAN PATENT SPECIFICATION

(11) **EP 4 322 654 B1**
(45) Date of publication and mention of the grant of the patent: **25.03.2026**
(21) Application number: 21936487.4
(22) Date of filing: 16.04.2021
(51) Int. Cl.: H04W 72/04, H04W 76/15, H04W 74/0816, H04W 84/12

(54) **WIRELESS COMMUNICATION METHOD AND DEVICE**
VERFAHREN UND VORRICHTUNG ZUR DRAHTLOSEN KOMMUNIKATION
PROCÉDÉ ET DISPOSITIF DE COMMUNICATION SANS FIL

(43) Date of publication of application: 14.02.2024
(73) Proprietor: GUANGDONG OPPO MOBILE TELECOMMUNICATIONS CORP., LTD., Dongguan, Guangdong 523860 (CN)
(72) Inventor: MA, Chenhao, Dongguan, Guangdong 523860 (CN); HOU, Ronghui, Dongguan, Guangdong 523860 (CN); HUANG, Lei, Singapore 049483 (SG); LU, Liuming, Dongguan, Guangdong 523860 (CN); LUO, Chaoming, Dongguan, Guangdong 523860 (CN); ZHOU, Pei, Dongguan, Guangdong 523860 (CN)
(74) Representative: Kraus & Lederer PartGmbB
(86) International application number: PCT/CN2021/087919
(87) International publication number: WO 2022/217612

(56) References cited:
- CN-A- 105 813 077
- CN-A- 112 203 344
- CN-A- 112 492 698
- CN-A- 112 512 135
- LIWEN CHU (NXP): "Low Latency Support", vol. 802.11 EHT; 802.11be, no. 1, 14 October 2020 (2020-10-14), pages 1 - 10, XP068173794, Retrieved from the Internet <URL:https://mentor.ieee.org/802.11/dcn/20/11-20-1058-01-00be-low-latency-support.pptx> [retrieved on 20201014]
- PATRICE NEZOU (CANON): "Low-Latency Triggered TWT", vol. 802.11 EHT; 802.11be, no. 3, 20 February 2021 (2021-02-20), pages 1 - 15, XP068178804, Retrieved from the Internet <URL:https://mentor.ieee.org/802.11/dcn/20/11-20-1843-03-00be-low-latency-triggered-twt.pptx> [retrieved on 20210220]
- MINYOUNG PARK (INTEL CORP): "Enhanced multi-link single radio operation", vol. 802.11 EHT; 802.11be, no. 7, 17 July 2020 (2020-07-17), pages 1 - 28, XP068170112, Retrieved from the Internet <URL:https://mentor.ieee.org/802.11/dcn/20/11-20-0562-07-00be-enhanced-multi-link-single-radio-operation.pptx> [retrieved on 20200717]

## Description

### TECHNICAL FIELD

The embodiments of the present disclosure relate to communication technology, and more particularly, to a wireless communication method, a station device, an access point device and a computer-readable storage medium.

### BACKGROUND

Non Simultaneous Transmit and Receive (NSTR) Multi-Link Device (MLD) transmission mechanism is introduced in Wireless Fidelity (WiFi) communication. For a scenario where multiple links of an NSTR MLD carry low-latency services, how to guarantee the delay requirements in transmission of the low-latency services on the multiple links is a technical problem to be solved.

IEEE Draft - "Low Latency Support" (LIWEN CHU (NXP)) discloses content for TWT support of low latency, STA's frame transmission in TB PPDU in low latency TWT SP, TWT improvement for low latency service, TXOP ending for low-latency TWT SP with NSTR non-AP MLD, further consideration for EMLSR non-AP MLD, further consideration for EMLMR non-AP MLD, further consideration for MLSR non-AP MLD, TID to link mapping and new TID to link mapping rules.

IEEE Draft - "Low-Latency Triggered TWT" (PATRICE NEZOU (CANON)) discusses a solution to support low-latency traffics based on TWT feature. The paper defines LL SP protection mechanisms and defines a Low Latency TWT Service Period (LL TWT SP) based on broadcast TWT dedicated to LL traffics.

### SUMMARY

The invention is set out in the appended set of claims.

### BRIEF DESCRIPTION OF DRAWINGS

FIG. 1 is a schematic diagram showing an architecture of a communication system in which an embodiment of the present disclosure can be applied.
FIG. 2 is a schematic diagram showing delay-sensitive service traffic according to the present disclosure.
FIG. 3 is a schematic diagram showing periodically reserved resources according to the present disclosure.
FIG. 4 is a schematic diagram showing a restricted TWT mechanism according to the present disclosure.
FIG. 5 is a schematic diagram showing a combination of a TWT element and a Quiet element according to the present disclosure.
FIG. 6 is a schematic diagram showing an asynchronous transmission and a synchronous transmission according to the present disclosure.
FIG. 7 is a schematic diagram showing alignment of PPDU end time according to the present disclosure.
FIG. 8 is a schematic diagram showing OOB interference in overlapping LL TWT SPs according to the present disclosure.
FIG. 9 is a schematic diagram showing overlapping of LL TWT SP according to the embodiment of the present disclosure.
FIG. 10 is a schematic flowchart illustrating a wireless communication method according to an embodiment of the present disclosure.
FIG. 11 is a schematic diagram showing a system architecture in which an embodiment of the present disclosure can be applied.
FIG. 12 is a schematic diagram showing establishment of a TWT agreement according to an embodiment of the present disclosure.
FIG. 13 to FIG. 23 are schematic diagrams of LL TWT SPs according to embodiments of the present disclosure.
FIG. 24 is a schematic block diagram of a wireless communication device according to an embodiment of the present disclosure.
FIG. 25 is a schematic block diagram of a wireless communication device according to an embodiment of the present disclosure.
FIG. 26 is a schematic block diagram of a communication device according to an embodiment of the present disclosure.
FIG. 27 is a schematic block diagram of an apparatus according to an embodiment of the present disclosure.
FIG. 28 is a schematic block diagram of a communication system according to an embodiment of the present disclosure.

### DESCRIPTION OF EMBODIMENTS

The technical solutions in the embodiments of the present disclosure will be described below with reference to the figure in the embodiments of the present disclosure. Obviously, the described embodiments are only some embodiments, rather than all embodiments, of the present disclosure. All other embodiments obtained by those skilled in the art based on the embodiments in the present disclosure without inventive efforts are to be encompassed by the scope of the present disclosure.

The solutions according to the embodiments of the present disclosure can be applied to various communication systems, including for example: Wireless Local Region Networks (WLAN), Wireless Fidelity (WiFi), or other communication systems.

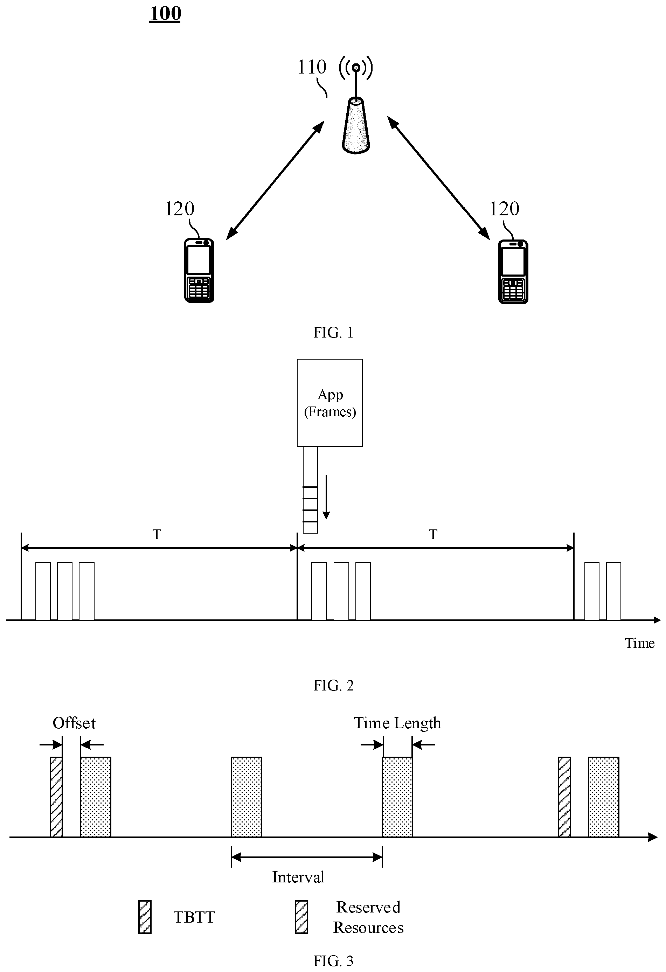

Exemplarily, a communication system 100 in which an embodiment of the present disclosure is applied is shown in FIG. 1. The communication system 100 may include an Access Point (AP) device 110 and a STATION (STA) device 120 accessing a network via the AP 110.

In the embodiments of the present disclosure, the STA device can be deployed on land, including indoor or outdoor, handheld, worn, or vehicle-mounted, deployed on water (e.g., on a ship), or deployed in the air (e.g., on an airplane, a balloon, a satellite, etc.).

In the embodiments of the present disclosure, the STA device may be a mobile phone, a tablet computer (Pad), a computer with a wireless transceiver function, a Virtual Reality (VR) device, an Augmented Reality (AR) device, a wireless device in industrial control, a wireless device in self driving, a wireless device in remote medical, a wireless device in smart grid, a wireless device in transportation safety, a wireless device in smart city, or a wireless device in smart home.

As non-limiting examples, in an embodiment of the present disclosure, the STA device may also be a wearable device. The wearable device, also known as wearable smart device, is a general term for wearable devices that are intelligently designed and developed from everyday wear, such as glasses, gloves, watches, clothes, and shoes, by applying wearable technologies. A wearable device is a portable device that can be directly worn on or integrated into a user's clothes or accessories. A wearable device is not only a kind of hardware device, but can also provide powerful functions based on software support, data interaction, and cloud interaction. In a broad sense, wearable smart devices may include full-featured, large-sized devices that can provide full or partial functions without relying on smart phones, such as smart watches or smart glasses, and devices that only focus on a certain type of application function and need to cooperate with other devices such as smart phones for use, such as various smart bracelets and smart jewelries for physical sign monitoring.

FIG. 1 exemplarily shows one AP and two STAs. Optionally, the communication system 100 may include multiple APs and other numbers of STAs. The embodiment of the present disclosure is not limited to this.

It can be appreciated that, in the embodiments of the present disclosure, a device having a communication function in a network/system may be referred to as a communication device. Taking the communication system 100 shown in FIG. 1 as an example, the communication devices may include the AP 110 and the STA 120 with communication functions. The AP 110 and the STA 120 may be the specific devices described above, and details thereof will be omitted here. The communication devices may also include other devices in the communication system 100, e.g., other network entities such as a network controller, a gateway, etc., and the embodiment of the present disclosure is not limited to any of these examples.

In addition, the terms "system" and "network" may often be used interchangeably herein. The term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

It can be appreciated that the term "indication" as used in the embodiments of the present disclosure may be a direct indication, an indirect indication, or an association. For example, if A indicates B, it may mean that A directly indicates B, e.g., B can be obtained from A. Alternatively, it may mean that A indicates B indirectly, e.g., A indicates C and B can be obtained from C. Alternatively, it may mean that there is an association between A and B.

The terms used in the embodiments of the present disclosure are provided only for explaining the specific embodiments of the present disclosure, rather than limiting the present disclosure. The terms such as "first", "second", "third", "fourth", etc., as used in the description, claims and figures of the present disclosure are used for distinguishing different objects from each other, rather than defining a specific order. In addition, the terms such as "include" and "have" and any variants thereof are intended to cover non-exclusive inclusion.

In the description of the embodiments of the present disclosure, the term "corresponding" may mean that there is a direct or indirect correspondence between the two, or may mean that there is an association between the two, or that they are in a relation of indicating and indicated, configuring or configured, or the like.

In the embodiments of the present disclosure, "predefined" may implemented as pre-stored in one or more devices (for example, including an AP and an STA) corresponding codes, tables or other means that can be used to indicate related information, and the present disclosure is not limited to its specific implementation. For example, "predefined" may refer to defined in protocols.

In the embodiments of the present disclosure, "protocols" may refer to standard protocols in the communication field, including e.g., the WiFi protocol and related protocols applied in future WiFi communication systems. The present disclosure is not limited to any of these examples.

In order to facilitate understanding of the technical solutions of the embodiments of the present disclosure, the technical solutions related to the present disclosure will be described below. The following related technologies as optional solutions may be arbitrarily combined with the technical solutions of the embodiments of the present disclosure, and all these combinations are to be encompassed by the protection scope of the embodiments of the present disclosure. The embodiments of the present disclosure include at least part of the following content.

With the emergence of a large number of delay-sensitive applications such as VR/AR, cloud games, and real-time video, extreme low-latency performance has become an important requirement for data transmission (delay-sensitive traffic is generally bursty and periodic, as shown in FIG. 2). It has been pointed out in the Project Authorization Request (PAR) of the 802.11be standard that, in addition to supporting a maximum throughput of 30Gbps, the standard needs to improve the delay and jitter performance of WiFi transmission. At the same time, it is pointed out in the project authorization rationale in the standard research and development content document Criteria for Standard Development (CSD) that reducing delay and jitter is an important feature that distinguishes the standard from other standards. The existing technical solutions cannot bring good experience to users when dealing with delay-sensitive applications. Therefore, solutions that can improve delay performance are desired to meet the requirements of the delay-sensitive applications.

Some technical solutions have been discussed in the 802.11be work group with regard to the low-latency part, including enhanced Enhanced Distributed Channel Access (EDCA) mechanism, resource preemption, multi-channel operation, transmission opportunity (TXOP) sharing, TXOP rule modification, Orthogonal Frequency Division Multiple Access (OFDMA) enhancement, resource reservation, Target Wake Time (TWT) mechanism enhancement, Multi-Link Operation (MLO), etc.
1) The idea of the enhanced EDCA mechanism is to add a new EDCA queue for delay-sensitive traffic and assign higher priority EDCA contention parameters for it, thereby reducing the access delay of the delay-sensitive traffic.
2) The idea of the MLO is to replace a legacy device with a Multi-Link Device (MLD). The MLD can operate on multiple links at the same time, and contend for a channel on the multiple links at the same time, so as to reduce channel access delay.
3) The idea of the TWT mechanism enhancement is to reuse the TWT mechanism to allocate periodic and protected Low Latency Target Wake Time Service Period (LL TWT SP) for delay-sensitive traffic. Within the LL TWT SP, the link where the delay-sensitive traffic resides exclusively uses the channel or contends for the channel with a high priority, thereby reducing its channel access delay.

The present disclosure combines the above enhanced TWT mechanism with the MLO scheme, by further extending the scheme incorporating the TWT element and the Quiet element to multi-link, to solve its transmission interference problem in NSTR MLD, thereby improving the delay performance of delay-sensitive traffic to a certain extent.

To facilitate better understanding of the embodiments of the present disclosure, a resource reservation scheme will be described.

The main idea of the resource reservation scheme is to allocate periodic, reserved resources for periodic delay-sensitive traffic, as shown in FIG. 3. Within the reserved resources, an STA with negotiated uplink low-latency traffic is allowed to access the channel, and other STAs are not allowed to perform uplink transmission or channel access (or allowed to perform channel contention with a low priority) within the reserved resources.

The resource reservation scheme has the following advantages. By reserving resources for the specific type of traffic, a less congested channel can be provided for delay-sensitive traffic, thereby reducing the pressure of channel contention. Further, other traffic can be allowed to contend for the channel with a lower priority, thereby improving resource utilization.

In order to facilitate better understanding of the embodiments of the present disclosure, a scheme of providing protected resources for periodic Low Latency Traffic (LL Traffic) by using an improved TWT mechanism will be described.

Delay-sensitive traffic generally has bursty and periodic characteristics, and the TWT mechanism in the 802.11ax standard can establish a periodic Target Wake Time Service Period (TWT SP) agreement between an STA and an AP. Therefore, the TWT mechanism can be reused to allocate periodic TWT SPs to an STA with periodic uplink delay-sensitive traffic, as an implementation of the resource reservation above. However, there are certain defects in the TWT mechanism. That is, before the start of the TWT SP negotiated by the STA and the AP, if the previous transmission is not completed, the transmission will not be stopped, resulting in the uncertainty of the start time of the TWT SP.

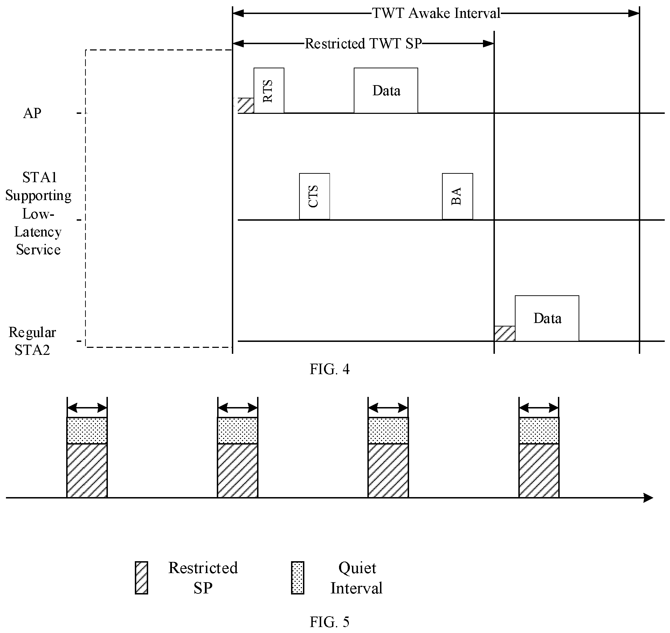

A restricted TWT mechanism requires that transmissions of other STAs must be stopped before a Restricted TWT SP starts, so as to ensure normal starting of the Restricted TWT SP and ensure that transmission of LL Traffic can be completed within the limited delay. As shown in FIG. 4, before start of a restricted TWT SP, Transmission Opportunities (TXOPs) of other regular STAs (that is, STAs that do not support low-latency services) should be ended, and the STA's TXOP should be ended before the TXOP expires, such that the STA that supports low-latency services (Low-latency STA) can exchange frames within a specified SP. Here, a Request To Send (RTS) or Clear To Send (CTS) protocol, which is equivalent to the handshake protocol, is used to solve the problem of frame exchange collision caused by hidden terminals. The RTS is enabled after a Distributed Inter-Frame Spacing (DIFS). When the RTS/CTS is enabled, an STA transmits an RTS frame before transmitting a data frame. When the receiver is willing to receive a data frame, it will respond with a CTS frame. After the RTS/CTS exchange, a time window (identified in the CTS frame) is started for the STA as the transmitter to transmit a data frame to the STA has confirmed to receive it. After receiving the data frame, the receiver transmits an Acknowledgment (ACK) or Block Acknowledgment (BA) to the transmitter to acknowledge receipt of the data frame after a Short Interframe Space (SIFS).

Specifically, by combining the TWT element and the Quiet element, the transmissions of other STAs can be ended before the Restricted TWT SP starts. In particular, a period, start time, end time, and other parameters of a TWT SP negotiated by the STA and the AP are set to same values as the related parameters of the Quiet element, as shown in FIG. 5. Since the Quiet element exists in the previous standard, both legacy STAs and Extremely High Throughput (EHT) STAs can set their own quiet time according to the Quiet element. The EHT STAs participating in the Restricted TWT SP can ignore the Quiet element, normally wake during the Restricted TWT SP period, and then exchange data with the AP.

To facilitate better understanding of the embodiments of the present disclosure, the multi-link data transmission scheme will be described.

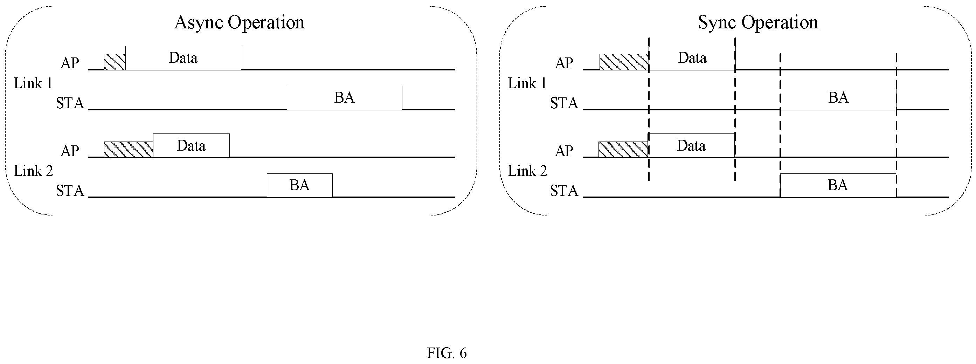

There are two transmission schemes in MLO: asynchronous transmission and synchronous transmission. The asynchronous transmission means that among the multiple links on which the MLD operates, each link operates independently and does not need to be aligned. The synchronous transmission means that each link must be aligned and synchronized, as shown in FIG. 6. However, if a Non-AP MLD is an NSTR device, then it cannot adopt the asynchronous operation mode, since there will be an Out Of Band (OOB) leakage or Coexistence in Devices (IDC) interference problem in the NSTR Link Pair. Therefore, if a certain MLD needs to perform data transmission over an NSTR Link Pair at the same time, it needs to perform synchronous operation to avoid the OOB problem.

In the multi-link data transmission scheme, in order to avoid the OOB or IDC interference problem, there is a PPDU alignment solution, which can be divided into two schemes: Physical layer Protocol Data Unit (PPDU) start time alignment and PPDU ending time alignment. The PPDU start time alignment requires some modifications to the existing access mechanism.

The PPDU ending time alignment scheme, as shown in FIG. 6, requires that the absolute value of the difference between the ending time of PPDUs transmitted on multiple links to be smaller than a certain limit (e.g., Short Interframe Space (SIFS)), such that the OOB problem can be prevented. Without such restriction, after a solicited PPDU transmitted on a certain link 1 (Link1) ends, there will be a response PPDU received after SIFS time. At this time, if there is still data being transmitted on Link2, the reception of the response PPDU will be degraded.

In an NSTR Non-AP MLD, if there is LL TWT SP1 on a Link1, then it should be considered to adjust transmissions on other links (such as Link2) during LL TWT SP1. For an AP MLD, when the AP MLD's affiliated AP1 on Link1 and the NSTR Non-AP MLD's affiliated STA1 on Link1 negotiate an LL TWT SP, the AP MLD has two choices: 1. the AP MLD ending time of PPDUs transmitted to the Non-AP MLD on Link1 and Link2; and 2. the AP MLD cannot transmit frames to the Non-AP MLD on Link2 within the LL TWT SP. For the Non-AP MLD, an affiliated STA2 on Link2 stops its TXOP before the LL TWT SP starts.

Rules such as resource preemption, multi-channel operation, TXOP sharing, TXOP rule modification, and OFDMA enhancement have not been specified in the current standard and cannot be directly applied.

The enhanced EDCA mechanism is only a part of the overall Quality of Service (QoS) framework. It is the premise to meet the requirements of delay-sensitive applications and improve user experience. It cannot meet the requirements alone, and specifically, it needs to cooperate with other technical solutions. For example, it can be combined with the MLO to form delay-sensitive links.

The MLO operation remains at the concept/idea level in terms of reducing latency. For example, if a device can support 8 active links, and each link can support a delay of 1 millisecond with a probability of 90%, then this MLD can theoretically support 1 millisecond latency with a probability of 99,999999%. However, in the current standard, the specific implementation and specific operation of the MLO in terms of low latency have not been mentioned much. Moreover, the MLO still has problems such as OOB interference inside NSTR STA devices that need to be solved, and a lot of detail work will be required before it can provide real services for the latency-sensitive traffic.

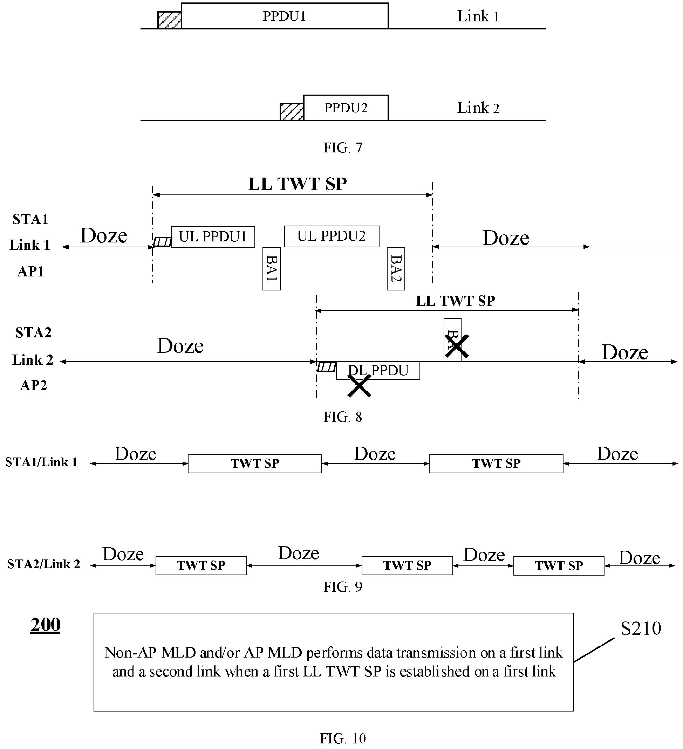

The enhanced TWT mechanism is the latest development of 802.11be with regard to low-latency. It combines the TWT element and the Quiet element to provide a protected access period for periodic delay-sensitive traffic. On one hand, the Quiet element can prevent non-LL TWT SP member STAs from contending for channels during an LL TWT SP. On the other hand, LL TWT SP member STAs can ignore the Quiet element, so as to wake and perform data transmission at the start time of the LL TWT SP. However, the current discussion is only for a single link, and there is no discussion on applying the Quiet element to multi-link. Moreover, there are potential problems such as NSTR MLD devices in multi-link, so it cannot be directly applied to multi-link to provide the best possible service for delay sensitive applications, e.g., the OOB interference problem within the LL TWT SP shown in FIG. 8. If this scheme is directly applied to an NSTR MLD device with two links, the LL TWT SPs on the two links may overlap. In this case, since the NSTR MLD device cannot receive and transmit at the same time, a transmission of a low-latency service on a certain link may not be completed in the LL TWT SP.

It should be noted that the station device (STA) may also be referred to as a Non-Access Point Station (Non-AP STA).

In view of the above problems, the present disclosure provides a multi-link LL TWT SP cooperation scheme based on an NSTR MLD device. For a scenario where multiple links of an NSTR MLD device carry low-latency services separately, delay requirements for low-latency service transmissions on the multiple links can be guaranteed.

The LL TWT as used in the present disclosure refers to the TWT established using the Restricted TWT mechanism. The present disclosure uses a Non-AP MLD and an AP MLD as examples for data transmission.

In the present disclosure, the Non-AP MLD is an NSTR Non-AP MLD, and the AP MLD is a Simultaneous Transmit and Receive (STR) AP MLD.

The application scenario of the present disclosure may be as follows. When the AP MLD is an NSTR Non-AP MLD that establishes an LL TWT SP on an NSTR Link Pair, there are two cases: 1) For a time interval, only the LL TWT SP on one link includes the interval (that is, the LL TWT SPs on the NSTR Link Pair do not overlap); 2) the LL TWT SPs on both links include the interval (that is, the LL TWT SPs on the NSTR Link Pair overlap), as shown in FIG. 9.

It should be noted that the present disclosure covers various cases involved in the LL TWT SP overlap problem in multi-link. In addition, the solution of extending a Quiet element to multi-link is also within the protection scope of the present disclosure.

The technical solutions of the present disclosure will be described in detail below with reference to specific embodiments.

FIG. 10 is a schematic flowchart illustrating a wireless communication method 200 according to a claimed embodiment of the present disclosure. The wireless communication method 200 is applied in a multi-link communication system formed by a Non-AP MLD and an AP MLD. The Non-AP MLD includes at least a first STA and a second STA. The first STA forms a first link with a first AP in an AP MLD associated with the first STA, and the second STA forms a second link with a second AP in an AP MLD associated with the second STA. Specifically, as shown in FIG. 10, the wireless communication method 200 may include at least part of the following content.

At S210, when a first LL TWT SP is established on the first link, the Non-AP MLD performs data transmission on the first link and the second link.

In an embodiment of the present disclosure, the first STA may establish the first LL TWT SP on the first link according to first information.

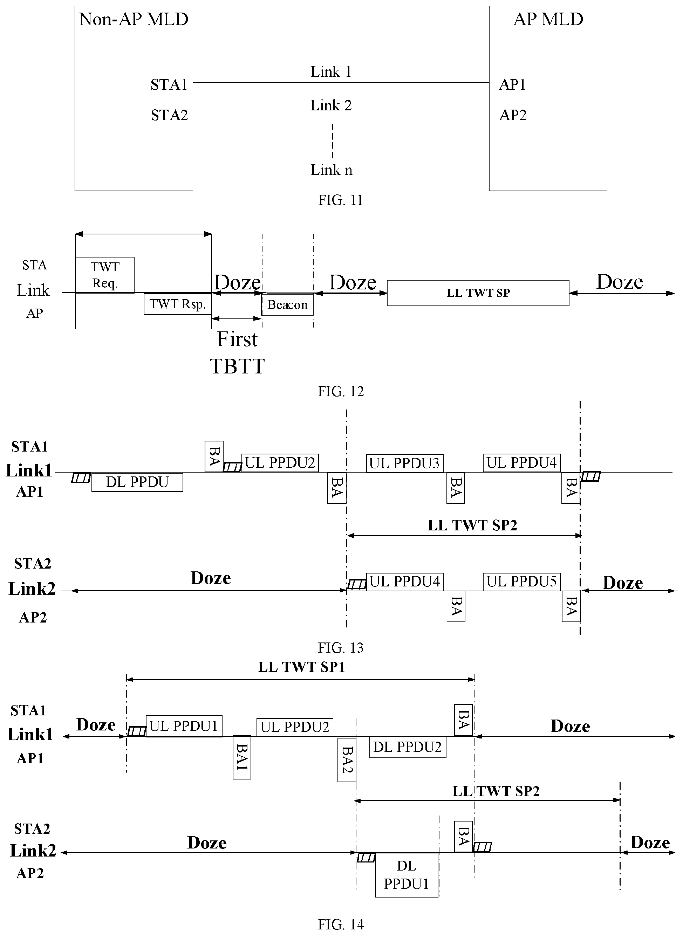

In an embodiment of the present disclosure, the first link and the second link may be an NSTR Link Pair. Specifically, as shown in FIG. 11, the AP MLD includes the first AP and the second AP, the Non-AP MLD includes the first STA and the second STA, the first STA and the first AP form the first link, and the second STA and the second AP for the second link. The affiliated devices in the same MLD can exchange messages. For example, the first AP and the second AP can exchange messages, and the first STA and the second STA can exchange messages.

It should be noted that the Non-AP MLD is generally an NSTR MLD, and the AP MLD is generally an STR MLD.

It should be noted that the NSTR MLD may also include links other than the first link and the second link, and the present disclosure is not limited to this.

It should be noted that the purpose of establishing the LL TWT SP is to provide a protection period for delay-sensitive traffic of the NON-AP MLD with multiple delay-sensitive service flows. For example, in the first LL TWT SP, only the first STA and the first AP can perform channel access and data transmission.

In some embodiments, the first STA and the second STA may transmit Restricted TWT (R-TWT) request frames to the first AP and the second AP, respectively, requesting to establish their respective R-TWT agreements. After receiving an R-TWT request frame and determining R-TWT parameters, the first AP and/or the second AP transmits an R-TWT response frame to the first STA and/or the second STA to approve the establishment of the TWT agreement. Alternatively, the first STA may transmit a Multi-link R-TWT request frame to the first AP, requesting to establish R-TWT agreements on the first link and the second link, respectively. After receiving a Multi-link R-TWT request frame and determining R-TWT parameters on the two links, the first AP transmits a Multi-link R-TWT response frame to the first STA to approve the establishment of the R-TWT agreements on the first link and the second link. So far, the establishment of the LL TWT SPs on the two links is completed.

After receiving the R-TWT response frame from the AP MLD, the Non-AP MLD's affiliated STA (the first STA and/or the second STA) receives a beacon frame at Target Beacon Transmission Time (TBTT). The beacon frame contains both an R-TWT element and a Quiet element. The R-TWT element indicates LL TWT SP related information. The quiet intervals indicated by the Quiet element completely overlap with the TWT SP indicated by the TWT element. The specific process is shown in Figure 12.

In a claimed embodiment the first LL TWT SP may be established on the first link and a second LL TWT SP may be established on the second link.

In a claimed embodiment the first LL TWT SP and the second LL TWT SP completely overlap in a time domain. In some non-claimed embodiments, the first LL TWT SP and the second LL TWT SP may partially overlap in the time domain, or the first LL TWT SP and the second LL TWT SP may not overlap in the time domain.

It should be noted that the first LL TWT SP and the second LL TWT SP completely overlapping in the time domain may include they having same start time and end time and having a same LL TWT parameter.

In some embodiments, when the first LL TWT SP and the second LL TWT SP completely overlap or partially overlap in the time domain, the Non-AP MLD and/or the AP MLD may perform the data transmission on the first link and the second link according to a leader/follower transmission mode on the first link and the second link.

Specifically, for example, when the first link and the second link of the Non-AP MLD belong to an NSTR link pair, the Non-AP MLD may perform the data transmission on the first link and the second link according to a leader/follower transmission mode on the first link and the second link.

In some embodiments, the Leader/Follower transmission mode may be configured to be enabled within the first LL TWT SP and the second LL TWT SP, and disabled out of the first LL TWT SP and the second LL TWT SP.

That is, for the first link and the second link, the Leader/Follower transmission mode is enabled for the transmissions on the two links within the LL TWT SP region, and disabled for the transmissions on the two links out of the LL TWT SP region. The NSTR MLD device has the function of switching the Leader/Follower operation mode on the links.

In some embodiments, in a region of the second LL TWT SP that overlaps the first LL TWT SP in the time domain, when the first link is in a leader transmission mode, the second link is in a follower transmission mode, the second AP and/or the second STA may not actively transmit data, and the second AP and/or the second STA may passively perform synchronous transmission or stop data transceiving according to the transmission on the first link (corresponding to the transmission in the region where the first LL TWT SP and the second LL TWT SP overlap in the time domain).

In some embodiments, in a region of the first LL TWT SP that overlaps the second LL TWT SP in the time domain, when the first link is in the follower transmission mode, the second link is in the leader transmission mode, the first AP and/or the first STA may not actively transmit data, and the first AP and/or the first STA may passively perform synchronous transmission or stop data transceiving according to the transmission on the second link (corresponding to the transmission in the region where the first LL TWT SP and the second LL TWT SP overlap in the time domain).

In some non-claimed embodiments, when the first AP and/or the first STA performs data transmission in a region of the first LL TWT SP, and the second AP and/or the second STA is in a region that overlaps the first LL TWT SP in the time domain but is not within the second LL TWT SP, the second AP and/or the second STA may not actively transmit data, and the second AP and/or the second STA may passively perform synchronous transmission or stop data transceiving according to the transmission on the first link (corresponding to the transmission in the region where the first LL TWT SP and the second LL TWT SP do not overlap in the time domain).

In some non-claimed embodiments, when the second AP and/or the second STA performs data transmission in a region of the second LL TWT SP, and the first AP and/or the first STA is in a region that overlaps the second LL TWT SP in the time domain but is not within the first LL TWT SP, the second AP and/or the second STA may not actively transmit data, and the second AP and/or the second STA may passively perform synchronous transmission or stop data transceiving according to the transmission on the first link (corresponding to the transmission in the region where the first LL TWT SP and the second LL TWT SP do not overlap in the time domain).

That is, in the LL TWT SP region, a Leader Link and a Follower Link need to be selected in the NSTR Link Pair (that is, the first link and the second link). The Leader link determines the order of data packet transmission, and the Follower link does not actively transmit data, and the Follower link passively perform synchronous transmission according to the transmission of the Leader link.

In some embodiments, the leader/follower transmission mode of the first link may be controlled by the first AP and/or the first STA, and/or the leader/follower transmission mode of the second link may be controlled by the second AP and/or the second STA.

In some embodiments, the leader/follower transmission mode of the first link may be controlled by the first AP instructing the first STA via a trigger frame or a management frame, and/or the leader/follower transmission mode of the second link may be controlled by the second AP instructing the second STA via a trigger frame or a management frame.

For example, the first AP may transmit a trigger frame to the first STA to instruct the first STA to set the first link as the leader transmission mode, and the first STA may set the first link as the leader transmission mode according to the instruction of the trigger frame.

In another example, the first AP may transmit a management frame to the first STA to instruct the first STA to set the first link as the follower transmission mode, and the first STA may set the first link as the follower transmission mode according to the instruction of the management frame.

In some embodiments, the first STA may receive first indication information transmitted by the first AP via a trigger frame or a management frame. The first indication information indicates the transmission mode of the first link; and the first STA may set the leader/follower transmission mode of the first link according to the first indication information.

In some embodiments, when both the first LL TWT SP and the second LL TWT SP are trigger-enabled LL TWT SPs, the leader/follower transmission mode of the first link may be controlled by the first AP, and/or the leader/follower transmission mode of the second link may be controlled by the second AP.

It should be noted that, when both the first LL TWT SP and the second LL TWT SP are trigger-enabled LL TWT SPs, the first STA is not allowed to perform channel access using an EDCA mechanism in the first LL TWT SP, and the second STA is not allowed to perform channel access using an EDCA mechanism in the second LL TWT SP.

In some embodiments, the leader/follower transmission mode of the first link may be indicated by a value of a variable in an LL TWT SP module in the first AP. The LL TWT SP module in the first AP includes first information field and/or second information field, a value of a variable in the first information field indicates whether to enable the leader/follower transmission mode, and a value of a variable in the second information field indicates whether the first link is in the leader transmission mode or the follower transmission mode.

For example, in the LL TWT SP module in the first AP, the first information field may include a 0/1 variable, where 0 means that the leader/follower transmission mode is disabled and 1 means that the leader/follower transmission mode is enabled, and the second information field may include a 0/1 variable, where 0 represents the Follower transmission mode and 1 represents the Leader transmission mode.

In some embodiments, the leader/follower transmission mode of the first link may be indicated by a value of a variable in an LL TWT SP module in the first STA. The LL TWT SP module in the first STA includes third information field and/or fourth information field, a value of a variable in the third information field indicates whether to enable the leader/follower transmission mode, and a value of a variable in the fourth information field indicates whether the first link is in the leader transmission mode or the follower transmission mode.

For example, in the LL TWT SP module in the first STA, the third information field may include a 0/1 variable, where 0 means that the leader/follower transmission mode is disabled and 1 means that the leader/follower transmission mode is enabled, and the fourth information field may include a 0/1 variable, where 0 represents the Follower transmission mode and 1 represents the Leader transmission mode.

In some embodiments, the leader/follower transmission mode of the second link may be indicated by a value of a variable in an LL TWT SP module in the second AP. The LL TWT SP module in the second AP includes fifth information field and/or sixth information field, a value of a variable in the fifth information field indicates whether to enable the leader/follower transmission mode, and a value of a variable in the sixth information field indicates whether the second link is in the leader transmission mode or the follower transmission mode.

For example, in the LL TWT SP module in the second AP, the fifth information field may include a 0/1 variable, where 0 means that the leader/follower transmission mode is disabled and 1 means that the leader/follower transmission mode is enabled, and the sixth information field may include a 0/1 variable, where 0 represents the Follower transmission mode and 1 represents the Leader transmission mode.

In some embodiments, the leader/follower transmission mode of the second link may be indicated by a value of a variable in an LL TWT SP module in the second STA. The LL TWT SP module in the second STA includes seventh information field and/or eighth information field, a value of a variable in the seventh information field indicates whether to enable the leader/follower transmission mode, and a value of a variable in the eighth information field indicates whether the second link is in the leader transmission mode or the follower transmission mode.

For example, in the LL TWT SP module in the second STA, the seventh information field may include a 0/1 variable, where 0 means that the leader/follower transmission mode is disabled and 1 means that the leader/follower transmission mode is enabled, and the eighth information field may include a 0/1 variable, where 0 represents the Follower transmission mode and 1 represents the Leader transmission mode.

In some embodiments, the first AP may the transmission mode of the first link based on at least one of a priority of a service transmitted in the first LL TWT SP, a priority of a service transmitted in the second LL TWT SP, start time of the first LL TWT SP, start time of the second LL TWT SP, link state information of the first link, and link state information of the second link.

For example, when the priority of the service transmitted in the first LL TWT SP is the lowest among services allowed to be transmitted in LL TWT SPs, the first AP may determine to set the first link as the follower transmission mode.

In another example, when the priority of the service transmitted in the first LL TWT SP is the highest among services allowed to be transmitted in LL TWT SPs, the first AP may determine to set the first link as the leader transmission mode.

In another example, when the link state information of the first link reflects that link quality of the first link is relatively low, the first AP may determine to set the first link as the follower transmission mode.

In another example, when the link state information of the first link reflects that link quality of the first link is relatively high, the first AP may determine to set the first link as the leader transmission mode.

In another example, when the priority of the service transmitted in the first LL TWT SP is lower than the priority of the service transmitted in the second LL TWT SP, the first AP may determine to set the first link as the follower transmission mode.

In another example, when the priority of the service transmitted in the first LL TWT SP is higher than the priority of the service transmitted in the second LL TWT SP, the first AP may determine to set the first link as the leader transmission mode.

In another example, when the priority of the service transmitted in the first LL TWT SP is same as the priority of the service transmitted in the second LL TWT SP, and the start time of the first LL TWT SP is later than the start time of the second LL TWT SP, the first AP may determine to set the first link as the follower transmission mode.

In another example, when the priority of the service transmitted in the first LL TWT SP is same as the priority of the service transmitted in the second LL TWT SP, and the start time of the first LL TWT SP is earlier than the start time of the second LL TWT SP, the first AP may determine to set the first link as the leader transmission mode.

In another example, when link quality of the first link reflected in the link state information of the first link is worse than link quality of the second link reflected in the link state information of the second link, the first AP may determine to set the first link as the follower transmission mode.

In another example, when link quality of the first link reflected in the link state information of the first link is better than link quality of the second link reflected in the link state information of the second link, the first AP may determine to set the first link as the leader transmission mode.

It should be noted that the link state information may be a channel attribute of the link. It can reflect a fading factor of a signal on each transmission path, i.e., a value of each element in a link gain matrix H, such as signal scattering, fading (multipath fading or shadowing fading), power decay of distance, etc.

In some embodiments, the transmission mode of the first link and/or the second link may be determined according to a predetermined condition.

In some embodiments, the predetermined condition may include:
when the priority of the service transmitted in the first LL TWT SP is lower than the priority of the service transmitted in the second LL TWT SP, the first link is in a follower transmission mode and the second link is in a leader transmission mode;
when the priority of the service transmitted in the first LL TWT SP is higher than the priority of the service transmitted in the second LL TWT SP, the first link is in the leader transmission mode and the second link is in the follower transmission mode;
when the priority of the service transmitted in the first LL TWT SP is same as the priority of the service transmitted in the second LL TWT SP, and the start time of the first LL TWT SP is later than the start time of the second LL TWT SP, the first link is in the follower transmission mode and the second link is in the leader transmission mode; or
when the priority of the service transmitted in the first LL TWT SP is same as the priority of the service transmitted in the second LL TWT SP, and the start time of the first LL TWT SP is earlier than the start time of the second LL TWT SP, the first link is in the leader transmission mode and the second link is in the follower transmission mode.

In some embodiments, the predetermined condition may be agreed in a protocol, or the predetermined condition may be agreed by the first AP and the second AP.

In some embodiments, the transmission mode of the first link and/or the second link may be determined according to the priorities of the services transmitted in the first LL TWT SP and the second LL TWT SP.

For example, when the priority of the service transmitted in the first LL TWT SP is lower than the priority of the service transmitted in the second LL TWT SP, the first link may be in the follower transmission mode, and the second link may be in the leader transmission mode.

In another example, when the priority of the service transmitted in the first LL TWT SP is higher than the priority of the service transmitted in the second LL TWT SP, the first link may be in the leader transmission mode, and the second link may be in the follower transmission mode.

In some embodiments, when the priority of the service transmitted in the first LL TWT SP is same as the priority of the service transmitted in the second LL TWT SP, the transmission mode of the first link and/or the second link may be determined according to start time of the first LL TWT SP and start time of the second LL TWT SP.

For example, when the priority of the service transmitted in the first LL TWT SP is same as the priority of the service transmitted in the second LL TWT SP, and the start time of the first LL TWT SP is later than the start time of the second LL TWT SP, the first link may be in the follower transmission mode and the second link may be in the leader transmission mode.

In another example, when the priority of the service transmitted in the first LL TWT SP is same as the priority of the service transmitted in the second LL TWT SP, and the start time of the first LL TWT SP is earlier than the start time of the second LL TWT SP, the first link may be in the leader transmission mode and the second link may be in the follower transmission mode.

Therefore, in the embodiment of the present disclosure, by setting the leader/follower transmission mode on the first link and the second link, the transmission of the low-latency service on the link of the first link and the second link that is configured as the leader transmission mode can be guaranteed, so as to avoid the problem that when LL TWT SPs on two links overlap, the transmission of the low-latency service on a link cannot be completed within the LL TWT SP since the NSTR MLD device cannot receive and transmit at the same time.

In some embodiments, when the first link is in the follower transmission mode and the second link is in the leader transmission mode, and the first STA cannot upload an uplink buffer in time, a service period of the first LL TWT SP may be configured to extend to at least cover a region where the uplink buffer of the first STA is restricted.

In some embodiments, when the first link is in the follower transmission mode and the second link is in the leader transmission mode, and the first STA cannot upload a downlink buffer in time, the service period of the first LL TWT SP may be configured to extend to at least cover a region where the downlink buffer of the first STA is restricted.

In some embodiments, when the first link is in a follower transmission mode, the second link is in a leader transmission mode, and the data transmission in the first LL TWT SP has ended before start time of the second LL TWT SP, the Non-AP MLD (such as the first STA) may release remaining service time of the first LL TWT SP.

In some embodiments, the first LL TWT SP is established on the first link, and no LL TWT SP is established on the second link. In this case, the Non-AP MLD and/or the AP MLD may perform the data transmission on the first link and the second link according to a leader/follower transmission mode on the first link and the second link.

Specifically, for example, when the first link and the second link of the Non-AP MLD belong to an NSTR link pair, the Non-AP MLD may perform the data transmission on the first link and the second link at least within a time range of the first LL TWT SP according to a leader/follower transmission mode on the first link and the second link.

In some embodiments, the leader/follower transmission mode may be configured to be enabled within the first LL TWT SP, and disabled out of the first LL TWT SP.

In some embodiments, when the first link is in the leader transmission mode, the second link may be in the follower transmission mode, the second AP and/or the second STA may not actively transmit data on the second link within a time range of the first LL TWT SP, and the second AP and/or the second STA may perform synchronous transmission or stop data transceiving within the time range of the first LL TWT SP according to the transmission on the first link.

In some embodiments, when the first LL TWT SP and the second LL TWT SP have same start time, same end time, and a same LL TWT parameter, the Non-AP MLD may perform synchronous transmission on the first LL TWT SP and the second LL TWT SP without setting the leader/follower transmission mode on the first link and the second link.

In some embodiments, when the first LL TWT SP and the second LL TWT SP have same start time, same end time, and a same LL TWT parameter, the AP MLD may perform synchronous transmission on the first LL TWT SP and the second LL TWT SP without setting the leader/follower transmission mode on the first link and the second link.

In some embodiments, when the first LL TWT SP is established on the first link, and no LL TWT SP is established on the second link, the leader/follower transmission mode of the first link may be controlled by the first AP and/or the first STA.

In some embodiments, when the first LL TWT SP is established on the first link, and no LL TWT SP is established on the second link, the leader/follower transmission mode of the first link may be controlled by the first AP instructing the first STA via a trigger frame or a management frame.

In some non-claimed embodiments, when the first LL TWT SP is established on the first link, and no LL TWT SP is established on the second link, the leader/follower transmission mode of the first link may be indicated by a value of a variable in an LL TWT SP module in the first AP. The LL TWT SP module in the first AP includes first information field and/or second information field, a value of a variable in the first information field indicates whether to enable the leader/follower transmission mode, and a value of a variable in the second information field indicates whether the first link is in the leader transmission mode or the follower transmission mode.

In some non-claimed embodiments, when the first LL TWT SP is established on the first link, and no LL TWT SP is established on the second link, the leader/follower transmission mode of the first link may be indicated by a value of a variable in an LL TWT SP module in the first STA. The LL TWT SP module in the first STA includes third information field and/or fourth information field, a value of a variable in the third information field indicates whether to enable the leader/follower transmission mode, and a value of a variable in the fourth information field indicates whether the first link is in the leader transmission mode or the follower transmission mode.

Therefore, in the embodiment of the application, when the first LL TWT SP is established on the first link, and no LL TWT SP is established on the second link, by setting the first link as the leader transmission mode and the second link as the follower transmission mode, the transmission of the low-latency service on the first link can be guaranteed.

In some non-claimed embodiments, when the first LL TWT SP is established on the first link and the second LL TWT SP is established on the second link, the first LL TWT SP and the second LL TWT SP may not overlap in the time domain.

In some non-claimed embodiments, the first LL TWT SP and the second LL TWT SP may do not overlap in time domain as scheduled by the first AP or the second AP.

In some non-claimed embodiments, the first LL TWT SP and the second LL TWT SP may not overlap in the time domain as scheduled by the first AP at request of the first STA; or the first LL TWT SP and the second LL TWT SP may not overlap in the time domain as scheduled by the second AP at request of the second STA.

In some embodiments, the first information may include a TWT element, and a control field in the TWT element may include at least one reserved bit indicating that the first LL TWT SP and the second LL TWT SP do not overlap in the time domain.

Therefore, in the embodiment of the present disclosure, the first LL TWT SP and the second LL TWT SP do not overlap in the time domain, so as to avoid the problem that when LL TWT SPs on two links overlap, the transmission of the low-latency service on a link cannot be completed within the LL TWT SP since the NSTR MLD device cannot receive and transmit at the same time.

In some embodiments, the Non-AP MLD (e.g., the first STA) may end a TXOP on the first link before start time of the second LL TWT SP, or the Non-AP MLD (e.g., the first STA) may abandon a TXOP on the first link that has not ended by the start time of the second LL TWT SP.

Specifically, for example, when the priority of the service transmitted in the first LL TWT SP is lower than the priority of the service transmitted in the second LL TWT SP, the first STA may end the TXOP on the first link before the start time of the second LL TWT SP, or the first STA may abandon the TXOP on the first link that has not ended by the start time of the second LL TWT SP. That is, the first LL TWT SP and the second LL TWT SP partially overlap in the time domain.

Therefore, in the embodiment of the present disclosure, the first STA ends the TXOP on the first link before the start time of the second LL TWT SP, or the first STA abandons the TXOP on the first link that has not ended by the start time of the second LL TWT SP, so as to avoid the problem that when LL TWT SPs on two links overlap, the transmission of the low-latency service on a link cannot be completed within the LL TWT SP since the NSTR MLD device cannot receive and transmit at the same time.

In some embodiments, when both the first LL TWT SP and the second LL TWT SP are trigger-enabled LL TWT SPs, the Non-AP MLD or the AP MLD may control a last scheduled transmission for the first LL TWT SP before start time of the second LL TWT SP to end before the start time of the second LL TWT SP.

Specifically, for example, when the priority of the service transmitted in the first LL TWT SP is lower than the priority of the service transmitted in the second LL TWT SP, and when both the first LL TWT SP and the second LL TWT SP are trigger-enabled LL TWT SPs, the last scheduled transmission for the first LL TWT SP before start time of the second LL TWT SP ends before the start time of the second LL TWT SP. That is, the first LL TWT SP and the second LL TWT SP partially overlap in the time domain.

Therefore, in the embodiment of the present disclosure, when both the first LL TWT SP and the second LL TWT SP are trigger-enabled LL TWT SPs, the last scheduled transmission for the first LL TWT SP before start time of the second LL TWT SP ends before the start time of the second LL TWT SP. so as to avoid the overlap of LL TWT SPs on the two links, so as to avoid the problem that when LL TWT SPs on two links overlap, the transmission of the low-latency service on a link cannot be completed within the LL TWT SP since the NSTR MLD device cannot receive and transmit at the same time.

In some embodiments, when the data transmission in the first LL TWT SP has ended before start time of the second LL TWT SP, the Non-AP MLD (e.g., the first STA) may release remaining time of the first LL TWT SP.

Specifically, for example, when the priority of the service transmitted in the first LL TWT SP is lower than the priority of the service transmitted in the second LL TWT SP, and when the data transmission in the first LL TWT SP has ended before the start time of the second LL TWT SP, the priority of the service transmitted in the first LL TWT SP is lower than the priority of the service transmitted in the second LL TWT SP. That is, the first LL TWT SP and the second LL TWT SP partially overlap in the time domain.

Therefore, in the embodiment of the present disclosure, when the data transmission in the first LL TWT SP has ended before the start time of the second LL TWT SP, the first STA releases remaining time of the first LL TWT SP, so as to avoid the problem that when LL TWT SPs on two links overlap, the transmission of the low-latency service on a link cannot be completed within the LL TWT SP since the NSTR MLD device cannot receive and transmit at the same time.

The present disclosure extends the enhanced TWT mechanism for low-latency services to multi-link, and further enhances the improvement of delay performance brought by the single-link technology. Considering the portability and cost of the STA multi-link device, factors such as energy saving of the STA multi-link device are also important to be considered, which coincides with the design of the present disclosure. The primary object of the present disclosure is to extend the enhanced TWT mechanism to multi-link, so as to provide predictable delay services for delay-sensitive traffic. The TWT mechanism can just meet the original requirements of Non-AP MLD. Therefore, on one hand, the technical solutions of the present disclosure can reduce the delay, and on the other hand, they conform to the standardization process.

The solutions of the present disclosure will be described in detail below with reference to Embodiment 1 to Embodiment 10.

In Embodiment 1, no LL TWT SP is established on Link 1, and LL TWT SP 2 is established on Link 2. As shown in FIG. 13, there is no delay-sensitive service on Link 1, and a delay-sensitive service flow is transmitted in LL TWT SP 2 on Link 2. Normal data transmission occurs on Link 1 before LL TWT SP 2 starts. When the time period of LL TWT SP 2 starts, LL TWT SP management modules in corresponding affiliated devices on Link 1 and Link 2 set corresponding variable values, respectively. In the LL TWT SP management module of the affiliated AP (i.e., AP2) and the affiliated STA (i.e., STA2) corresponding to Link 2, a link transmission mode 0/1 variable is set to 1, and a link Leader/Follower indicator variable is set to 1. In the LL TWT SP management module in the affiliated AP (i.e., AP1) and the affiliated STA (i.e., STA1) corresponding to Link 1, a link transmission mode 0/1 variable is set to 1, and a link Leader/Follower indicator variable is set to 0. AP1 and STA1 can use rule-b as a channel access rule. When a backoff counter is 0, they keep quiet and do not transmit. After data transmission starts on Link 2, transmissions on Link 1 and Link 2 maintain synchronized.

AP1 and STA1 may use rule-b as the channel access rule. Specifically, AP1 and STA1 may not transmit data or signaling even if they have a channel transmission opportunity, or AP1 and STA1 may not transmit data or signaling even if they access the channel.

It should be noted that Link 2 in Embodiment 1 may correspond to the above first link, that is, AP2 may correspond to the above first AP. STA2 may correspond to the above first STA. Link 1 may correspond to the above second link, that is, AP1 may correspond to the above second AP, and STA1 may correspond to the above second STA.

In Embodiment 2, LL TWT SP 1 is established on Link 1, and LL TWT SP 2 is established on Link 2. As shown in FIG. 14, there is a partial overlapping region between LL TWT SP 1 and LL TWT SP 2, and the transmission on Link 1 starts normally at the start of LL TWT SP 1. When LL TWT SP 2 starts, Link 2 is the Leader link, and Link 1 is the Follower link. No active transmission is performed on Link 1, and when a downlink transmission is performed on Link 2, downlink transmissions are performed on Link 1 and Link 2 synchronously.

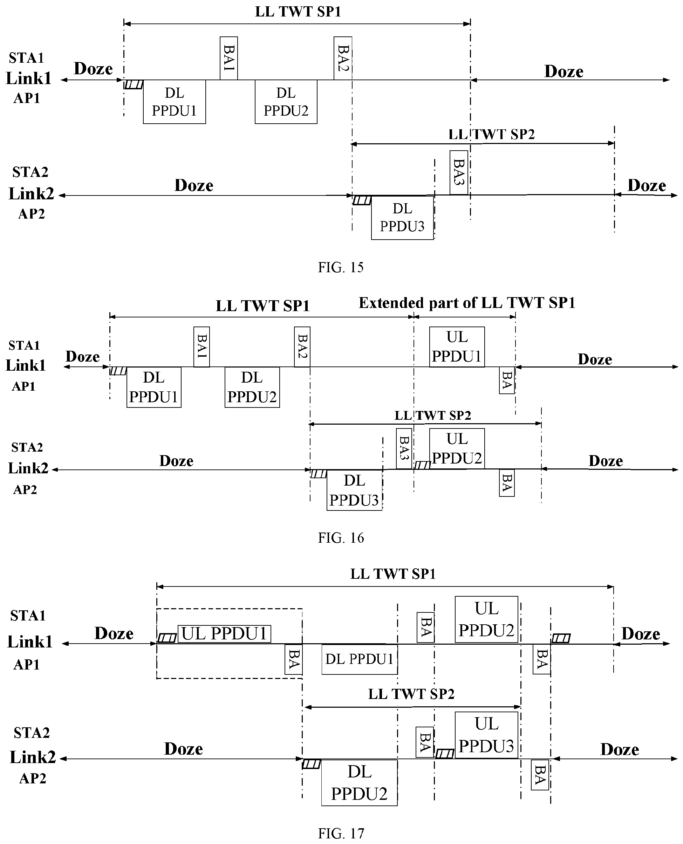

In Embodiment 3, LL TWT SP 1 is established on Link 1, and LL TWT SP 2 is established on Link 2. As shown in FIG. 15, LL TWT SP 1 and LL TWT SP 2 partially overlap. After LL TWT SP 2 starts, Link 2 is the Leader link, and Link 1 is the Follower link. Since the Link 1 has no downlink data after LL TWT SP 2 starts, Link 1 is idle during the downlink transmission on the link 2.

In an optional implementation of Embodiment 3, since delay-sensitive data is also transmitted on LL TWT SP 1, in this case, after LL TWT SP 2 starts, since Link 2 is the Leader link and Link 1 is the Follower link, STA1 cannot transmit its uplink buffer in time, which will degrade system performance to a certain extent. In order to reduce this degradation to a certain extent, LL TWT SP 1 can be extended within the restricted delay time range of the uplink buffer of STA1, so as to transmit the uplink buffer of STA1, as shown in FIG. 16.

It should be noted that the uplink buffer in the above Embodiment 3 may alternatively be a downlink buffer. For details, reference may be made to the relevant description of the uplink buffer, and description thereof will be omitted here.

In Embodiment 4, LL TWT SP 1 is established on Link 1, and LL TWT SP 2 is established on Link 2. As shown in FIG. 17, LL TWT SP 1 completely covers LL TWT SP 2. STA1 has a TXOP, and determines whether the length of the TXOP exceeds the start time of LL TWT SP 2 on Link 2. If so, STA1 shortens transmission time of a PPDU by adjusting the length of the PPDU or the transmission Modulation and Coding Scheme (MCS), etc., so as to ensure that the TXOP ends before LL TWT SP 2 starts. When STA1 has a TXOP, if the start time of LL TWT SP 2 on Link 2 is close to the current time, STA1 may abandon the TXOP without transmission. When AP1 has a downlink TXOP for transmission to STA1, it also needs to perform the same operation as above STA1.

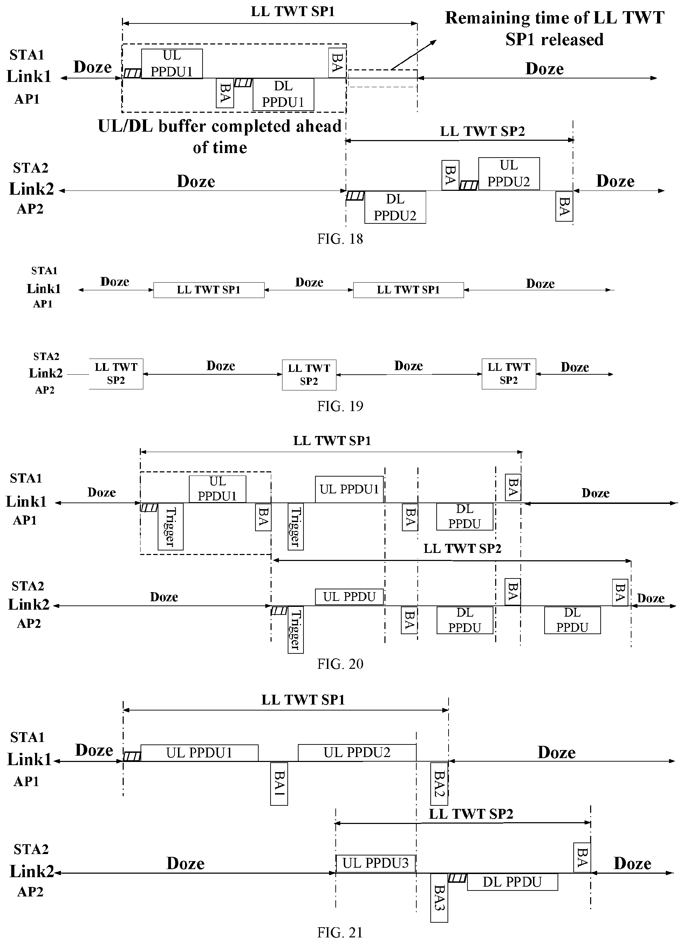

In Embodiment 5, LL TWT SP 1 is established on Link 1, and LL TWT SP 2 is established on Link 2. As shown in FIG. 18, there is a partial overlapping region between LL TWT SP 1 and LL TWT SP 2, and the priority of the service transmitted in LL TWT SP 1 is lower than that of the service transmitted in LL TWT SP 2. However, before LL TWT SP 2 starts, the data transmission in LL TWT SP 1 has been completed, and at this time STA1 actively releases its remaining SP time. In this case, for LL TWT SP 2, the LL TWT SP management module corresponding to Link 2 sets Link 2 as the Leader transmission link, and no update is performed for the LL TWT SP management module corresponding to Link 1 since STA1 is in a doze state. The transmission on Link 2 is not affected.

It should be noted that the above embodiments all use the NSTR link pair as an example. In practice, an NSTR Non-AP MLD may have every two of Link1, Link2, and Link3 as an NSTR Link Pair at the same time. The coordinated synchronous transmission solution designed by the present disclosure is also applicable to this situation. For example, assuming that the service priorities in LL TWT SPs on Link1, Link2, and Link3 are in a descending order, with this solution, synchronous transmission is performed on Link 2 according to Link 1, and synchronous transmission is performed on Link 3 according to Link 2.

In Embodiment 6, LL TWT SP 1 is established on Link 1, and LL TWT SP 2 is established on Link 2. As shown in FIG. 19, there is no overlapping region between LL TWT SP 1 and LL TWT SP 2. During the LL TWT SP establishment phase, an affiliated STA (STA1 or STA2) on a link in the Non-AP MLD can request the AP MLD regarding whether to allocate an LL TWT SP that overlaps the LL TWT SP on the other link in the NSTR link pair. Specifically, it can be indicated using the TWT element, for example, the reserved bits B6 and B7 in the Control field of the TWT element, where "01" indicates no overlap, "10" indicates complete overlap, and "11" indicates partial overlap. As shown in FIG. 19, STA1 in the Non-AP MLD can request LL TWT SP 1 that does not overlap LL TWT SP 2 on Link 2 by exchanging frames with AP1.

In Embodiment 7, LL TWT SP 1 is established on Link 1, and LL TWT SP 2 is established on Link 2. As shown in FIG. 20, there is a partial overlapping region between LL TWT SP 1 and LL TWT SP 2, and the priority of the service transmitted in LL TWT SP 1 is lower than that of the service transmitted in LL TWT SP 2. The LL TWT SPs established on the two links are both trigger-enabled TWT SPs. The uplink and downlink transmissions in LL TWT SP 1 and LL TWT SP 2 are both managed by the AP, and STA1 and STA2 are not allowed to perform channel access using the EDCA mechanism. Therefore, when starting the last scheduled transmission before the start of LL TWT SP 2, AP1 should ensure that the scheduled transmission ends before the start of LL TWT SP 2, as shown in the dashed box in FIG. 20.

In Embodiment 8, LL TWT SP 1 is established on Link 1, and LL TWT SP 2 is established on Link 2. As shown in FIG. 21, there is a partial overlapping region between LL TWT SP 1 and LL TWT SP 2, and the priority of the service transmitted in LL TWT SP 1 is the same as that of the service transmitted in LL TWT SP 2. A predetermined rule is predefined between STA 1 and AP1, and/or a predetermined rule is predefined between STA 2 and AP2: the link on which the LL TWT SP starts earlier is the Leader link. Therefore, in FIG. 21, Link 1 is configured as the Leader link, and Link 2 is configured as the Follower link.

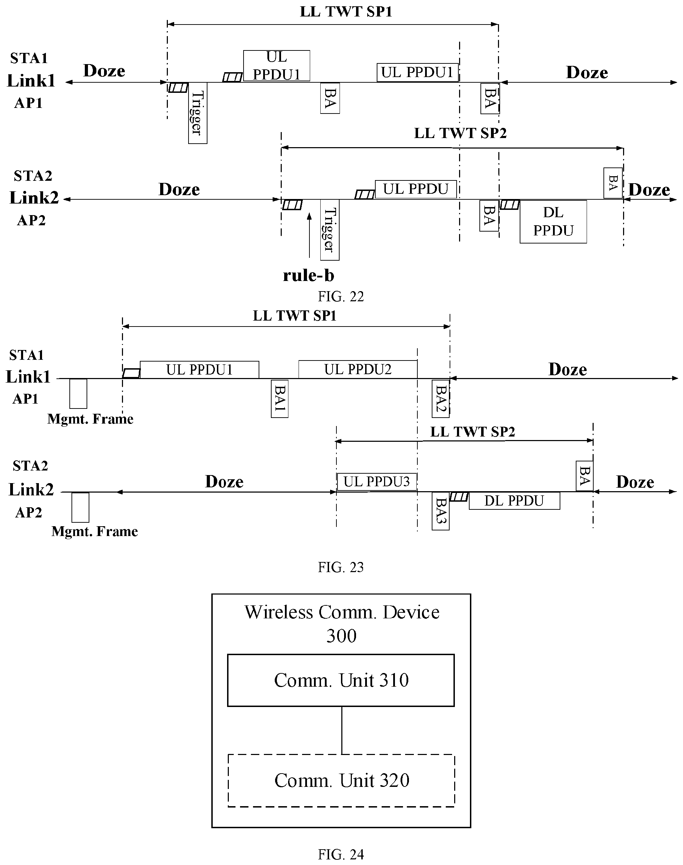

In Embodiment 9, LL TWT SP 1 is established on Link 1, and LL TWT SP 2 is established on Link 2. As shown in FIG. 22, there is a partial overlapping region between LL TWT SP 1 and LL TWT SP 2. When LL TWT SP starts, the affiliated STA cannot contend for the channel, but has to wait for a Trigger frame from the affiliated AP. The AP MLD decides which link is the Leader and which link is the Follower according to the real-time states of the two links, and transmits a Trigger frame to the affiliated AP to inform the affiliated STA corresponding to the affiliated AP. The Trigger only acts as a "notification" and does not require an Acknowledgment (ACK). If the information contained in the Trigger received by the STA indicates that the link on which it resides is the Leader Link, then the STA can immediately use the EDCA mechanism to contend for the channel. In FIG. 22, when LL TWT SP 1 starts, since STA2 is in a doze state, Link 1 must be the Leader Link at this time. After receiving this information, STA1 starts to contend for the channel, and starts uplink transmission after the contention succeeds. Since the uplink PPDU1 exceeds the start time of LL TWT SP2, AP2 should not transmit any Trigger frame to STA2 at the start time, but should adopt a method such as rule-b and does not transmit the Trigger frame until the downlink transmission on Link1 starts. The purpose is to avoid the OOB problem. If the Trigger frame transmitted by AP2 is to inform STA2 that Link2 is the Leader link at this time, then STA1 should stop channel contention and data transmission, and is not synchronized with STA2 until STA2 starts the uplink transmission.

In Embodiment 10, LL TWT SP 1 is established on Link 1, and LL TWT SP 2 is established on Link 2. As shown in FIG. 23, there is a partial overlapping region between LL TWT SP 1 and LL TWT SP 2. AP1 and AP2 inform STA1 and STA2 of the Leader/Follower information via a management frame (Mgmt. Frame) before the start of the TWT SPs, as shown in FIG. 23. AP1 and AP2 inform STA1 and STA2 that Link 1 is the Leader link and Link 2 is the Follower link, respectively.

The method embodiments of the present disclosure have been described in detail above with reference to FIGS. 10-23, and the apparatus embodiments of the present disclosure will be described in detail below with reference to FIGS. 24-25. It can be appreciated that the apparatus embodiments and the method embodiments correspond to each other, and for similar descriptions, reference can be made to the method embodiments.

FIG. 24 shows a schematic block diagram of a wireless communication device 300 according to a non-claimed embodiment of the present disclosure. The wireless communication device 300 is applied in a Non-Access-Point Multi-Link Device (Non-AP MLD) including at least a first Station (STA) and a second STA. The first STA forms a first link with a first Access Point (AP) in an Access Point Multi-Link Device (AP MLD) associated with the first STA, and the second STA forms a second link with a second AP in the AP MLD. As shown in FIG. 24, the wireless communication device 300 includes:
a communication unit 310 configured to perform data transmission on the first link and the second link when a first Low Latency Target Wake Time Service Period (LL TWT SP) is established on the first link.

In some embodiments, a second LL TWT SP is established on the second link. The first LL TWT SP and the second LL TWT SP completely overlap in a time domain. The first LL TWT SP and the second LL TWT SP may partially overlap in the time domain, or the first LL TWT SP and the second LL TWT SP may not overlap in the time domain.

In some embodiments, the first LL TWT SP and the second LL TWT SP may completely or partially overlap in the time domain, and the communication unit 310 may be configured to:

perform, when the first link and the second link of the Non-AP MLD belong to a Non Simultaneous Transmit and Receive (NSTR) link pair, the data transmission on the first link and the second link according to a leader/follower transmission mode on the first link and the second link.

In some embodiments, the leader/follower transmission mode may be configured to be enabled within the first LL TWT SP and the second LL TWT SP, and the leader/follower transmission mode may be configured to be disabled out of the first LL TWT SP and the second LL TWT SP.

In some embodiments:
in a region of the second LL TWT SP that overlaps the first LL TWT SP in the time domain, when the first link is in a leader transmission mode, the second link is in a follower transmission mode, the second AP and/or the second STA does not actively transmit data, and the second AP and/or the second STA passively performs synchronous transmission or stops data transceiving according to the transmission on the first link;
in a region of the first LL TWT SP that overlaps the second LL TWT SP in the time domain, when the first link is in the follower transmission mode, the second link is in the leader transmission mode, the first AP and/or the first STA does not actively transmit data, and the first AP and/or the first STA passively performs synchronous transmission or stops data transceiving according to the transmission on the second link;
when the first AP and/or the first STA performs data transmission in a region of the first LL TWT SP, and the second AP and/or the second STA is in a region that overlaps the first LL TWT SP in the time domain but is not within the second LL TWT SP, the second AP and/or the second STA does not actively transmit data, and the second AP and/or the second STA passively performs synchronous transmission or stops data transceiving according to the transmission on the first link; or
when the second AP and/or the second STA performs data transmission in a region of the second LL TWT SP, and the first AP and/or the first STA is in a region that overlaps the second LL TWT SP in the time domain but is not within the first LL TWT SP, the second AP and/or the second STA does not actively transmit data, and the second AP and/or the second STA passively performs synchronous transmission or stops data transceiving according to the transmission on the first link.

In some embodiments, no LL TWT SP may be established on the second link, and the communication unit 310 may be configured to:
perform, when the first link and the second link of the Non-AP MLD belong to an NSTR link pair, the data transmission on the first link and the second link at least within a time range of the first LL TWT SP according to a leader/follower transmission mode on the first link and the second link.

In some embodiments, when the first link is in a leader transmission mode, the second link is in a follower transmission mode, the second AP and/or the second STA may not actively transmit data on the second link within a time range of the first LL TWT SP, and the second AP and/or the second STA may perform synchronous transmission or stop data transceiving within the time range of the first LL TWT SP according to the transmission on the first link.

In some embodiments, the leader/follower transmission mode of the first link may be controlled by the first AP and/or the first STA, and/or the leader/follower transmission mode of the second link may be controlled by the second AP and/or the second STA.

In some embodiments, the leader/follower transmission mode of the first link may be controlled by the first AP instructing the first STA via a trigger frame or a management frame, and/or the leader/follower transmission mode of the second link may be controlled by the second AP instructing the second STA via a trigger frame or a management frame.

In some embodiments, the leader/follower transmission mode of the first link may be indicated by a value of a variable in an LL TWT SP module in the first AP. The LL TWT SP module in the first AP may include first information field and/or second information field, a value of a variable in the first information field may indicate whether to enable the leader/follower transmission mode, and a value of a variable in the second information field may indicate whether the first link is in the leader transmission mode or the follower transmission mode.

In some embodiments, the leader/follower transmission mode of the first link may be indicated by a value of a variable in an LL TWT SP module in the first STA. The LL TWT SP module in the first STA may include third information field and/or fourth information field, a value of a variable in the third information field may indicate whether to enable the leader/follower transmission mode, and a value of a variable in the fourth information field may indicate whether the first link is in the leader transmission mode or the follower transmission mode.

In some embodiments, the leader/follower transmission mode of the second link may be indicated by a value of a variable in an LL TWT SP module in the second AP. The LL TWT SP module in the second AP may include fifth information field and/or sixth information field, a value of a variable in the fifth information field may indicate whether to enable the leader/follower transmission mode, and a value of a variable in the sixth information field may indicate whether the second link is in the leader transmission mode or the follower transmission mode.

In some embodiments, the leader/follower transmission mode of the second link may be indicated by a value of a variable in an LL TWT SP module in the second STA. The LL TWT SP module in the second STA may include seventh information field and/or eighth information field, a value of a variable in the seventh information field may indicate whether to enable the leader/follower transmission mode, and a value of a variable in the eighth information field may indicate whether the second link is in the leader transmission mode or the follower transmission mode.

In some embodiments, the wireless communication device 300 may further include a processing unit 320.

The communication unit 310 may be further configured to receive first indication information transmitted by the first AP or the second AP via a trigger frame or a management frame, the first indication information indicating a transmission mode of the first link.

The processing unit 320 may be configured to set the leader/follower transmission mode of the first link according to the first indication information.

In some embodiments, the transmission mode of the first link may be determined based on at least one of a priority of a service transmitted in the first LL TWT SP, a priority of a service transmitted in the second LL TWT SP, start time of the first LL TWT SP, start time of the second LL TWT SP, link state information of the first link, and link state information of the second link.

In some embodiments, the transmission mode of the first link and/or the second link may be determined according to a predetermined condition.

In some embodiments, the predetermined condition may include:
when the priority of the service transmitted in the first LL TWT SP is lower than the priority of the service transmitted in the second LL TWT SP, the first link is in a follower transmission mode and the second link is in a leader transmission mode;
when the priority of the service transmitted in the first LL TWT SP is higher than the priority of the service transmitted in the second LL TWT SP, the first link is in the leader transmission mode and the second link is in the follower transmission mode;
when the priority of the service transmitted in the first LL TWT SP is same as the priority of the service transmitted in the second LL TWT SP, and the start time of the first LL TWT SP is later than the start time of the second LL TWT SP, the first link is in the follower transmission mode and the second link is in the leader transmission mode; or
when the priority of the service transmitted in the first LL TWT SP is same as the priority of the service transmitted in the second LL TWT SP, and the start time of the first LL TWT SP is earlier than the start time of the second LL TWT SP, the first link is in the leader transmission mode and the second link is in the follower transmission mode.

In some embodiments, the predetermined condition may be agreed in a protocol, or the predetermined condition may be agreed by the first AP and the second AP.

In some embodiments, the transmission mode of the first link and/or the second link may be determined according to the priorities of the services transmitted in the first LL TWT SP and the second LL TWT SP.

In some embodiments, when the priority of the service transmitted in the first LL TWT SP is lower than the priority of the service transmitted in the second LL TWT SP, the first link may be in a follower transmission mode and the second link may be in a leader transmission mode; or
when the priority of the service transmitted in the first LL TWT SP is higher than the priority of the service transmitted in the second LL TWT SP, the first link may be in the leader transmission mode and the second link may be in the follower transmission mode.

In some embodiments, when the priority of the service transmitted in the first LL TWT SP is same as the priority of the service transmitted in the second LL TWT SP, the transmission mode of the first link and/or the second link may be determined according to start time of the first LL TWT SP and start time of the second LL TWT SP.

In some embodiments, when the priority of the service transmitted in the first LL TWT SP is same as the priority of the service transmitted in the second LL TWT SP, and the start time of the first LL TWT SP is later than the start time of the second LL TWT SP, the first link may be in a follower transmission mode and the second link may be in a leader transmission mode; or
when the priority of the service transmitted in the first LL TWT SP is same as the priority of the service transmitted in the second LL TWT SP, and the start time of the first LL TWT SP is earlier than the start time of the second LL TWT SP, the first link may be in the leader transmission mode and the second link may be in the follower transmission mode.

In some embodiments, when both the first LL TWT SP and the second LL TWT SP are trigger-enabled LL TWT SPs, the leader/follower transmission mode of the first link may be controlled by the first AP, and/or the leader/follower transmission mode of the second link may be controlled by the second AP.

In some embodiments, when the first link is in a follower transmission mode and the second link is in a leader transmission mode, and the first STA cannot upload an uplink buffer in time, a service period of the first LL TWT SP may be configured to extend to at least cover a region where the uplink buffer of the first STA is restricted.

In some embodiments, when the first link is in the follower transmission mode and the second link is in the leader transmission mode, and the first STA cannot upload a downlink buffer in time, the service period of the first LL TWT SP may be configured to extend to at least cover a region where the downlink buffer of the first STA is restricted.

In some embodiments, the communication unit 310 may be configured to:
perform, when the first LL TWT SP and the second LL TWT SP have same start time, same end time, and a same LL TWT parameter, synchronous transmission on the first LL TWT SP and the second LL TWT SP without setting the leader/follower transmission mode on the first link and the second link.

In some embodiments, the first LL TWT SP and the second LL TWT SP partially overlap in the time domain, and the wireless communication device 300 may further include a processing unit 320 configured to:
release, when the first link is in a follower transmission mode, the second link is in a leader transmission mode, and the data transmission in the first LL TWT SP has ended before start time of the second LL TWT SP, remaining service time of the first LL TWT SP.

In some embodiments, the first LL TWT SP and the second LL TWT SP may not overlap in the time domain as scheduled by the first AP or the second AP.

In some embodiments, the first LL TWT SP and the second LL TWT SP may not overlap in the time domain as scheduled by the first AP at request of the first STA; or
the first LL TWT SP and the second LL TWT SP may not overlap in the time domain as scheduled by the second AP at request of the second STA.

In some embodiments, the first LL TWT SP and the second LL TWT SP may not overlap in the time domain as indicated by at least one reserved bit in a control field in a Target Wake Time (TWT) element.

In some embodiments, the first LL TWT SP and the second LL TWT SP partially overlap in the time domain, and the wireless communication device 300 may further include a processing unit 320 configured to:
end a Transmission Opportunity (TXOP) on the first link before start time of the second LL TWT SP, or abandon a TXOP on the first link that has not ended by the start time of the second LL TWT SP.

In some embodiments, when both the first LL TWT SP and the second LL TWT SP are trigger-enabled LL TWT SPs, a last scheduled transmission for the first LL TWT SP before start time of the second LL TWT SP may end before the start time of the second LL TWT SP.

In some embodiments, the first LL TWT SP and the second LL TWT SP partially overlap in the time domain, and the wireless communication device 300 may further include a processing unit 320 configured to:
release, when the data transmission in the first LL TWT SP has ended before start time of the second LL TWT SP, remaining time of the first LL TWT SP.

In some embodiments, a priority of a service transmitted in the first LL TWT SP may be lower than a priority of a service transmitted in the second LL TWT SP.

Optionally, in some embodiments, the above communication unit may be a communication interface or a transceiver, or an input/output interface of a communication chip or a system-on-chip. The above processing unit may be one or more processors.

It can be appreciated that the wireless communication device 300 according to the embodiment of the present disclosure may correspond to the Non-AP MLD in the method embodiment of the present disclosure, and the above and other operations and/or functions of the respective units in the wireless communication device 300 are provided for the purpose of implementing the process flow corresponding to the Non-AP MLD in the method 200 shown in FIG. 10, and details thereof will be not omitted here for brevity.

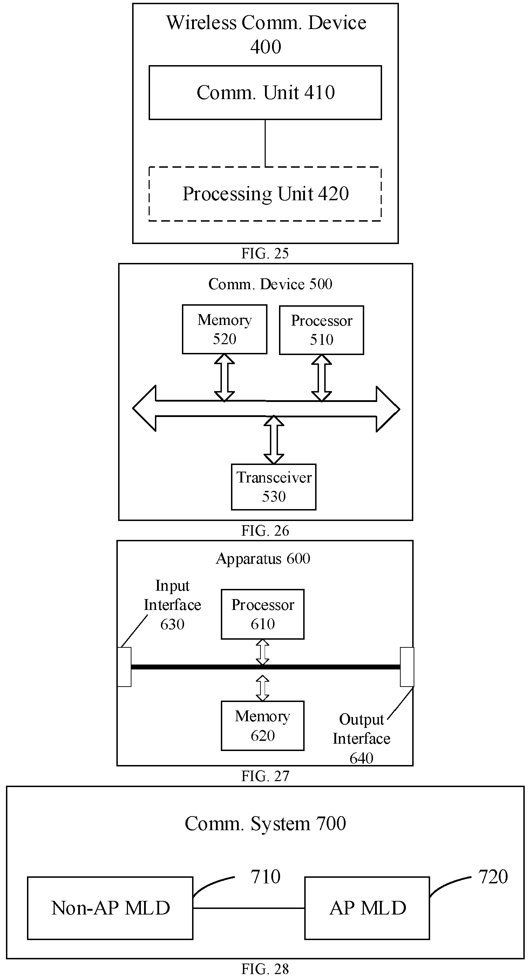

FIG. 25 is a schematic block diagram of a wireless communication device 400 according to a non-claimed embodiment of the present disclosure. The wireless communication device 400 is applied in an Access Point Multi-Link Device (AP MLD) including at least a first Access Point (AP) and a second AP. The first AP forms a first link with a first Station (STA) in a Non-Access-Point Multi-Link Device (Non-AP MLD) associated with the first AP, and the second AP forms a second link with a second STA in the Non-AP MLD. As shown in FIG. 25, the wireless communication device 400 includes:
a communication unit 410 configured to perform data transmission on the first link and the second link when a first Low Latency Target Wake Time Service Period (LL TWT SP) is established on the first link.

In some embodiments, a second LL TWT SP is established on the second link. The first LL TWT SP and the second LL TWT SP completely overlap in a time domain. The first LL TWT SP and the second LL TWT SP may partially overlap in the time domain, or the first LL TWT SP and the second LL TWT SP may not overlap in the time domain.

In some embodiments, the first LL TWT SP and the second LL TWT SP may completely or partially overlap in the time domain, and the communication unit 410 may be configured to:
perform, when the first link and the second link of the Non-AP MLD belong to a Non Simultaneous Transmit and Receive (NSTR) link pair, the data transmission on the first link and the second link according to a leader/follower transmission mode on the first link and the second link.

In some embodiments, the leader/follower transmission mode may be configured to be enabled within the first LL TWT SP and the second LL TWT SP, and the leader/follower transmission mode may be configured to be disabled out of the first LL TWT SP and the second LL TWT SP.

In some embodiments:
in a region of the second LL TWT SP that overlaps the first LL TWT SP in the time domain, when the first link is in a leader transmission mode, the second link may be in a follower transmission mode, the second AP and/or the second STA may not actively transmit data, and the second AP and/or the second STA may passively perform synchronous transmission or stop data transceiving according to the transmission on the first link;
in a region of the first LL TWT SP that overlaps the second LL TWT SP in the time domain, when the first link is in the follower transmission mode, the second link may be in the leader transmission mode, the first AP and/or the first STA may not actively transmit data, and the first AP and/or the first STA may passively perform synchronous transmission or stop data transceiving according to the transmission on the second link;
when the first AP and/or the first STA performs data transmission in a region of the first LL TWT SP, and the second AP and/or the second STA is in a region that overlaps the first LL TWT SP in the time domain but is not within the second LL TWT SP, the second AP and/or the second STA may not actively transmit data, and the second AP and/or the second STA may passively perform synchronous transmission or stop data transceiving according to the transmission on the first link; or
when the second AP and/or the second STA performs data transmission in a region of the second LL TWT SP, and the first AP and/or the first STA is in a region that overlaps the second LL TWT SP in the time domain but is not within the first LL TWT SP, the second AP and/or the second STA may not actively transmit data, and the second AP and/or the second STA may passively perform synchronous transmission or stop data transceiving according to the transmission on the first link.

In some embodiments, no LL TWT SP may be established on the second link, and the communication unit 410 may be configured to:
perform, when the first link and the second link of the Non-AP MLD belong to an NSTR link pair, the data transmission on the first link and the second link at least within a time range of the first LL TWT SP according to a leader/follower transmission mode on the first link and the second link.

In some embodiments, when the first link is in a leader transmission mode, the second link may be in a follower transmission mode, the second AP and/or the second STA may not actively transmit data on the second link within a time range of the first LL TWT SP, and the second AP and/or the second STA may perform synchronous transmission or stop data transceiving within the time range of the first LL TWT SP according to the transmission on the first link.

In some embodiments, the leader/follower transmission mode of the first link may be controlled by the first AP and/or the first STA, and/or the leader/follower transmission mode of the second link may be controlled by the second AP and/or the second STA.

In some embodiments, the leader/follower transmission mode of the first link may be controlled by the first AP instructing the first STA via a trigger frame or a management frame, and/or the leader/follower transmission mode of the second link may be controlled by the second AP instructing the second STA via a trigger frame or a management frame.

In some embodiments, the leader/follower transmission mode of the first link may be indicated by a value of a variable in an LL TWT SP module in the first AP. The LL TWT SP module in the first AP may include first information field and/or the second information field, a value of a variable in the first information field may indicate whether to enable the leader/follower transmission mode, and a value of a variable in the second information field may indicate whether the first link is in the leader transmission mode or the follower transmission mode.

In some embodiments, the leader/follower transmission mode of the first link may be indicated by a value of a variable in an LL TWT SP module in the first STA. The LL TWT SP module in the first STA may include third information field and/or fourth information field, a value of a variable in the third information field may indicate whether to enable the leader/follower transmission mode, and a value of a variable in the fourth information field may indicate whether the first link is in the leader transmission mode or the follower transmission mode.

In some embodiments, the leader/follower transmission mode of the second link may be indicated by a value of a variable in an LL TWT SP module in the second AP. The LL TWT SP module in the second AP may include fifth information field and/or sixth information field, a value of a variable in the fifth information field may indicate whether to enable the leader/follower transmission mode, and a value of a variable in the sixth information field may indicate whether the second link is in the leader transmission mode or the follower transmission mode.

In some embodiments, the leader/follower transmission mode of the second link may be indicated by a value of a variable in an LL TWT SP module in the second STA. The LL TWT SP module in the second STA may include seventh information field and/or eighth information field, a value of a variable in the seventh information field may indicate whether to enable the leader/follower transmission mode, and a value of a variable in the eighth information field may indicate whether the second link is in the leader transmission mode or the follower transmission mode.

In some embodiments, the wireless communication device 400 may further include a processing unit 420 configured to determine a transmission mode of the first link based on at least one of a priority of a service transmitted in the first LL TWT SP, a priority of a service transmitted in the second LL TWT SP, start time of the first LL TWT SP, start time of the second LL TWT SP, link state information of the first link, and the link state information of the second link.

In some embodiments, the communication unit 410 may be further configured to first indication information to the Non-AP MLD via a trigger frame or a management frame, the first indication information indicating the transmission mode of the first link.

In some embodiments, the transmission mode of the first link and/or the second link may be determined according to a predetermined condition.

In some embodiments, the predetermined condition may include:
when the priority of the service transmitted in the first LL TWT SP is lower than the priority of the service transmitted in the second LL TWT SP, the first link is in a follower transmission mode and the second link is in a leader transmission mode;
when the priority of the service transmitted in the first LL TWT SP is higher than the priority of the service transmitted in the second LL TWT SP, the first link is in the leader transmission mode and the second link is in the follower transmission mode;
when the priority of the service transmitted in the first LL TWT SP is same as the priority of the service transmitted in the second LL TWT SP, and the start time of the first LL TWT SP is later than the start time of the second LL TWT SP, the first link is in the follower transmission mode and the second link is in the leader transmission mode; or
when the priority of the service transmitted in the first LL TWT SP is same as the priority of the service transmitted in the second LL TWT SP, and the start time of the first LL TWT SP is earlier than the start time of the second LL TWT SP, the first link is in the leader transmission mode and the second link is in the follower transmission mode.

In some embodiments, the predetermined condition may be agreed in a protocol, or the predetermined condition may be agreed by the first AP and the second AP.

In some embodiments, the transmission mode of the first link and/or the second link may be determined according to the priorities of the services transmitted in the first LL TWT SP and the second LL TWT SP.

In some embodiments, when the priority of the service transmitted in the first LL TWT SP is lower than the priority of the service transmitted in the second LL TWT SP, the first link may be in a follower transmission mode and the second the link may be in a leader transmission mode; or
when the priority of the service transmitted in the first LL TWT SP is higher than the priority of the service transmitted in the second LL TWT SP, the first link may be in the leader transmission mode and the second link may be in the follower transmission mode.

In some embodiments, when the priority of the service transmitted in the first LL TWT SP is same as the priority of the service transmitted in the second LL TWT SP, the transmission mode of the first link and/or the second link may be determined according to start time of the first LL TWT SP and start time of the second LL TWT SP.

In some embodiments, when the priority of the service transmitted in the first LL TWT SP is same as the priority of the service transmitted in the second LL TWT SP, and the start time of the first LL TWT SP is later than the start time of the second LL TWT SP, the first link may be in a follower transmission mode and the second link may be in a leader transmission mode; or
when the priority of the service transmitted in the first LL TWT SP is same as the priority of the service transmitted in the second LL TWT SP, and the start time of the first LL TWT SP is earlier than the start time of the second LL TWT SP, the first link may be in the leader transmission mode and the second link may be in the follower transmission mode.

In some embodiments, when both the first LL TWT SP and the second LL TWT SP are trigger-enabled LL TWT SPs, the leader/follower transmission mode of the first link may be controlled by the first AP, and/or the leader/follower transmission mode of the second link may be controlled by the second AP.

In some embodiments, when the first link is in a follower transmission mode and the second link is in a leader transmission mode, and the first STA cannot upload an uplink buffer in time, a service period of the first LL TWT SP may be configured to extend to at least cover a region where the uplink buffer of the first STA is restricted.

In some embodiments, when the first link is in the follower transmission mode and the second link is in the leader transmission mode, and the first STA cannot upload a downlink buffer in time, the service period of the first LL TWT SP may be configured to extend to at least cover a region where the downlink buffer of the first STA is restricted.

In some embodiments, the communication unit 410 may be configured to:
perform, when the first LL TWT SP and the second LL TWT SP have same start time, same end time, and a same LL TWT parameter, synchronous transmission on the first LL TWT SP and the second LL TWT SP without setting the leader/follower transmission mode on the first link and the second link.

In some embodiments, the first LL TWT SP and the second LL TWT SP may not overlap in the time domain.

In some embodiments, the first LL TWT SP and the second LL TWT SP may not overlap in the time domain as scheduled by the first AP or the second AP.

In some embodiments, the first LL TWT SP and the second LL TWT SP may not overlap in the time domain as scheduled by the first AP at request of the first STA; or

the first LL TWT SP and the second LL TWT SP may not overlap in the time domain as scheduled by the second AP at request of the second STA.

In some embodiments, the first LL TWT SP and the second LL TWT SP may not overlap in the time domain as indicated by at least one reserved bit in a control field in a Target Wake Time (TWT) element.

In some embodiments, the first LL TWT SP and the second LL TWT SP partially overlap in the time domain, and
when both the first LL TWT SP and the second LL TWT SP are trigger-enabled LL TWT SPs, the processing unit 420 may be configured to control a last scheduled transmission for the first LL TWT SP before start time of the second LL TWT SP to end before the start time of the second LL TWT SP.

In some embodiments, a priority of a service transmitted in the first LL TWT SP may be lower than a priority of a service transmitted in the second LL TWT SP.

Optionally, in some embodiments, the above communication unit may be a communication interface or a transceiver, or an input/output interface of a communication chip or a system-on-chip. The above processing unit may be one or more processors.

It can be appreciated that the wireless communication device 400 according to the embodiment of the present disclosure may correspond to the AP MLD in the method embodiment of the present disclosure, and the above and other operations and/or functions of the respective units in the wireless communication device 400 are provided for the purpose of implementing the process flow corresponding to the AP MLD in the method 200 shown in FIG. 10, and details thereof will be not omitted here for brevity.

FIG. 26 is a schematic diagram showing a structure of a communication device 500 according to an embodiment of the present disclosure. The communication device 500 shown in FIG. 26 includes a processor 510, and the processor 510 can invoke and execute a computer program from a memory to implement the method in the embodiment of the present disclosure.

In some embodiments, as shown in FIG. 26, the communication device 500 may further include a memory 520. The processor 510 can invoke and execute a computer program from the memory 520 to implement the method in the embodiment of the present disclosure.

The memory 520 may be a separate device independent from the processor 510, or may be integrated in the processor 510.

In some non-claimed embodiments, as shown in FIG. 26, the communication device 500 may further include a transceiver 530, and the processor 510 may control the transceiver 530 to communicate with other devices, and in particular, transmit information or data to other devices, or receive information or data transmitted by other devices.

Here, the transceiver 530 may include a transmitter and a receiver. The transceiver 630 may further include one or more antennas.

In some embodiments, the communication device 500 may specifically be the Non-AP MLD according to the embodiment of the present disclosure, and the communication device 500 may implement the corresponding processes implemented by the Non-AP MLD in any of the methods according to the embodiments of the present disclosure. For the sake of brevity, details thereof will be omitted here.

In some embodiments, the communication device 500 may specifically be the AP MLD according to the embodiment of the present disclosure, and the communication device 500 may implement the corresponding processes implemented by the AP MLD in any of the methods according to the embodiments of the present disclosure. For the sake of brevity, details thereof will be omitted here.

FIG. 27 is a schematic diagram showing a structure of an apparatus according to an embodiment of the present disclosure. The apparatus 600 shown in FIG. 27 includes a processor 610, and the processor 610 can invoke and execute a computer program from a memory to implement the method in the embodiment of the present disclosure.

In some embodiments, as shown in FIG. 26, the apparatus 600 may further include a memory 620. The processor 610 can invoke and execute a computer program from the memory 620 to implement the method in the embodiment of the present disclosure.

The memory 620 may be a separate device independent from the processor 610, or may be integrated in the processor 610.

In some non-claimed embodiments, the apparatus 600 may further include an input interface 630. The processor 610 can control the input interface 630 to communicate with other devices or chips, and in particular, obtain information or data transmitted by other devices or chips.

In some non-claimed embodiments, the apparatus 600 may further include an output interface 640. The processor 610 can control the output interface 640 to communicate with other devices or chips, and in particular, output information or data to other devices or chips.

In some embodiments, the apparatus can be applied to the Non-AP MLD in the embodiment of the present disclosure, and the apparatus can implement the corresponding processes implemented by the Non-AP MLD in the various methods of the embodiments of the present disclosure. For the sake of brevity, details thereof will be omitted here.

In some embodiments, the apparatus can be applied to the AP MLD in the embodiment of the present disclosure, and the apparatus can implement the corresponding processes implemented by the AP MLD in the various methods of the embodiments of the present disclosure. For the sake of brevity, details thereof will be omitted here.

In some non-claimed embodiments, the apparatus in the embodiment of the present disclosure may be a chip, such as a system-level chip, a system-chip, a chip system, or a system-on-chip.

FIG. 28 is a schematic block diagram showing a communication system 700 according to an embodiment of the present disclosure. As shown in FIG. 28, the communication system 700 includes a Non-AP MLD 710 and an AP MLD 720.

Here, the Non-AP MLD 710 can be configured to implement the corresponding functions implemented by the Non-AP MLD in the above method, and the AP MLD 720 can be configured to implement the corresponding functions implemented by the AP MLD in the above method. For the sake of brevity, details thereof will be omitted here.

It is to be noted that the processor in the embodiment of the present disclosure may be an integrated circuit chip with signal processing capability. In an implementation, the steps of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the steps of the above methods in combination with its hardware.

It can be appreciated that the memory in the embodiments of the present disclosure may be a volatile memory or a non-volatile memory, or may include both volatile and non-volatile memories. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) ), and Direct Rambus RAM (DR RAM). It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

An embodiment of the present disclosure also provides a computer readable storage medium for storing a computer program.

In some embodiments, the computer readable storage medium can be applied to the access point device in the embodiment of the present disclosure, and the computer program can cause a computer to perform corresponding procedures implemented by the access point device in the method according to any of the embodiments of the present disclosure. Details thereof will be omitted here for simplicity.

In some embodiments, the computer readable storage medium can be applied to the station device in the embodiment of the present disclosure, and the computer program can cause a computer to perform corresponding procedures implemented by the station device in the method according to any of the embodiments of the present disclosure. Details thereof will be omitted here for simplicity.

A non-claimed embodiment of the present disclosure also provides a computer program product including computer program instructions.

In some embodiments, the computer program product can be applied to the access point device in the embodiment of the present disclosure, and the computer program instructions can cause a computer to perform corresponding procedures implemented by the access point device in the method according to any of the embodiments of the present disclosure. Details thereof will be omitted here for simplicity.

In some embodiments, the computer program product can be applied to the station device in the embodiment of the present disclosure, and the computer program instructions can cause a computer to perform corresponding procedures implemented by the station device in the method according to any of the embodiments of the present disclosure. Details thereof will be omitted here for simplicity.

A non-claimed embodiment of the present disclosure also provides a computer program.

In some embodiments, the computer program can be applied to the access point device in the embodiment of the present disclosure. The computer program, when executed on a computer, can cause the computer to perform corresponding procedures implemented by the access point device in the method according to any of the embodiments of the present disclosure. Details thereof will be omitted here for simplicity.

In some embodiments, the computer program can be applied to the station device in the embodiment of the present disclosure. The computer program, when executed on a computer, can cause the computer to perform corresponding procedures implemented by the station device in the method according to any of the embodiments of the present disclosure. Details thereof will be omitted here for simplicity.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

## Claims

1. A wireless communication method, applied in a Non-Access-Point Multi-Link Device, Non-AP MLD, comprising at least a first Station, STA, and a second STA, the first STA forming a first link with a first Access Point, AP, in an Access Point Multi-Link Device, AP MLD, associated with the first STA, and the second STA forming a second link with a second AP in the AP MLD,
the method comprising:
performing (S210), by the Non-AP MLD, data transmission on the first link and the second link, when a first Low Latency Target Wake Time Service Period, LL TWT SP, is established on the first link, **characterized in that**,
in a case that a second LL TWT SP is established on the second link, the first LL TWT SP and the second LL TWT SP completely overlap in a time domain.

2. The method according to claim 1, wherein the second LL TWT SP is established on the second link, and the first LL TWT SP and the second LL TWT SP completely overlapping in the time domain comprises: the first LL TWT SP and the second LL TWT SP having same start time and end time and having a same LL TWT parameter.

3. The method according to claim 1, wherein
in the case that the second LL TWT SP is established on the second link, said performing (S210), by the Non-AP MLD, the data transmission on the first link and the second link comprises:
performing, by the Non-AP MLD when the first link and the second link of the Non-AP MLD belong to a Non Simultaneous Transmit and Receive, NSTR, link pair, the data transmission on the first link and the second link based on an active/passive mode on the first link and the second link.

4. The method according to claim 3, wherein in the case that the second LL TWT SP is established on the second link:
in a region where the second LL TWT SP completely overlaps the first LL TWT SP in the time domain, when the first link is in the active mode, the second link is in the passive mode, the second AP and/or the second STA passively transmit data, and the second AP and/or the second STA passively performs synchronous transmission or stops data transceiving based on the transmission on the first link; or
in a region where the first LL TWT SP completely overlaps the second LL TWT SP in the time domain, when the first link is in the passive mode, the second link is in the active mode, the first AP and/or the first STA passively transmit data, and the first AP and/or the first STA passively performs synchronous transmission or stops data transceiving based on the transmission on the second link.

5. The method according to claim 3 or 4, wherein
the active/passive mode of the first link is controlled by the first AP and/or the first STA, and/or the active/passive mode of the second link is controlled by the second AP and/or the second STA.

6. The method according to claim 3 or 4, wherein
the active/passive mode of the first link is controlled by the first AP instructing the first STA via a trigger frame or a management frame, and/or the active/passive mode of the second link is controlled by the second AP instructing the second STA via a trigger frame or a management frame.

7. The method according to any one of claims 3 to 5, wherein
the active/passive mode of the first link is indicated by a value of a variable in an LL TWT SP module in the first AP, wherein the LL TWT SP module in the first AP comprises first information field and/or second information field, a value of a variable in the first information field indicates whether to enable the active/passive mode, and a value of a variable in the second information field indicates whether the first link is in the active mode or the passive mode.

8. The method according to any one of claims 3 to 6, wherein
the active/passive mode of the first link is indicated by a value of a variable in an LL TWT SP module in the first STA, wherein the LL TWT SP module in the first STA comprises third information field and/or fourth information field, a value of a variable in the third information field indicates whether to enable the active/passive mode, and a value of a variable in the fourth information field indicates whether the first link is in the active mode or the passive mode.

9. The method according to any one of claims 3 to 5, wherein
the active/passive mode of the second link is indicated by a value of a variable in an LL TWT SP module in the second AP, wherein the LL TWT SP module in the second AP comprises fifth information field and/or sixth information field, a value of a variable in the fifth information field indicates whether to enable the active/passive mode, and a value of a variable in the sixth information field indicates whether the second link is in the active mode or the passive mode.

10. The method according to any one of claims 3 to 6, wherein
the active/passive mode of the second link is indicated by a value of a variable in an LL TWT SP module in the second STA, wherein the LL TWT SP module in the second STA comprises seventh information field and/or eighth information field, a value of a variable in the seventh information field indicates whether to enable the active/passive mode, and a value of a variable in the eighth information field indicates whether the second link is in the active mode or the passive mode.

11. A wireless communication method, applied in an Access Point Multi-Link Device, AP MLD, comprising at least a first Access Point, AP, and a second AP, the first AP forming a first link with a first Station, STA, in a Non-Access-Point Multi-Link Device, Non-AP MLD, associated with the first AP, and the second AP forming a second link with a second STA in the Non-AP MLD;
the method comprising:
performing, by the AP MLD, data transmission on the first link and the second link when a first Low Latency Target Wake Time Service Period, LL TWT SP, is established on the first link, **characterized in that**,
in a case that a second LL TWT SP is established on the second link, the first LL TWT SP and the second LL TWT SP completely overlap in a time domain.

12. The method according to claim 11, wherein the second LL TWT SP is established on the second link, and the first LL TWT SP and the second LL TWT SP completely overlapping in a time domain comprises: the first LL TWT SP and the second LL TWT SP having same start time and end time and having a same LL TWT parameter.

13. A station device, comprising a processor (510) and a memory (520), wherein the memory (520) has a computer program stored thereon, and the processor (510) is configured to invoke and execute the computer program stored in the memory (520) to perform the method according to any of claims 1 to 10.

14. An access point device, comprising a processor (510) and a memory (520), wherein the memory (520) has a computer program stored thereon, and the processor (510) is configured to invoke and execute the computer program stored in the memory (520) to perform the method according to claim 11 or 12.

15. A computer-readable storage medium, **characterized by** having a computer program stored thereon that enables a computer to perform the method according to any one of claims 1 to 10.

## Patentansprüche

1. Drahtloskommunikationsverfahren, angewendet in einer Non-Access-Point-Multi-Link-Vorrichtung, Non-AP MLD, umfassend mindestens eine erste Station, STA, und eine zweite STA, wobei die erste STA eine erste Verbindung mit einem ersten Access-Point, AP, in einer Access-Point-Multi-Link-Vorrichtung, AP MLD, herstellt, die der ersten STA zugeordnet ist, und die zweite STA eine zweite Verbindung mit einem zweiten AP in dem AP MLD herstellt,
das Verfahren umfassend:
Durchführen (S210), durch die Non-AP MLD, einer Datenübertragung auf der ersten Verbindung und der zweiten Verbindung, wenn eine erste Low-Latency-Target-Wake-Time-Service-Period, LL TWT SP, auf der ersten Verbindung eingerichtet ist, **dadurch gekennzeichnet, dass**,
falls eine zweite LL TWT SP auf der zweiten Verbindung eingerichtet wird, sich die erste LL TWT SP und die zweite LL TWT SP vollständig in einer Zeitdomäne überlappen.

2. Verfahren nach Anspruch 1, wobei die zweite LL TWT SP auf der zweiten Verbindung eingerichtet ist, und die erste LL TWT SP und die zweite LL TWT SP, die sich vollständig in der Zeitdomäne überlappen, Folgendes umfassen: die erste LL TWT SP und die zweite LL TWT-SP, die gleiche Startzeit und Endzeit aufweisen und den gleichen LL-TWT-Parameter aufweisen.

3. Verfahren nach Anspruch 1, wobei,
falls die zweite LL TWT SP auf der zweiten Verbindung eingerichtet ist, das Durchführen (S210), durch die Non-AP MLD, der Datenübertragung auf der ersten Verbindung und der zweiten Verbindung Folgendes umfasst:
Durchführen, durch die Non-AP MLD, wenn die erste Verbindung und die zweite Verbindung der Non-AP MLD zu einem Non-Simultaneous-Transmit-and-Receive-, NSTR-, Verbindungspaar gehören, der Datenübertragung auf der ersten Verbindung und der zweiten Verbindung auf Grundlage eines aktiven/passiven Modus auf dem ersten Verbindung und der zweiten Verbindung.

4. Verfahren nach Anspruch 3, wobei, falls die zweite LL TWT SP auf der zweiten Verbindung eingerichtet ist:
in einem Bereich, in dem die zweite LL TWT SP die erste LL TWT SP in der Zeitdomäne vollständig überlappt, wenn sich die erste Verbindung im aktiven Modus befindet, sich die zweite Verbindung im passiven Modus befindet, der zweite AP und/oder die zweite STA passiv Daten überträgt und der zweite AP und/oder die zweite STA passiv eine synchrone Übertragung durchführt oder Datensendung und -empfang auf Grundlage der Übertragung auf der ersten Verbindung einstellt; oder
in einem Bereich, in dem die erste LL TWT SP die zweite LL TWT SP in der Zeitdomäne vollständig überlappt, wenn sich die erste Verbindung im passiven Modus befindet, sich die zweite Verbindung im aktiven Modus befindet, der erste AP und/oder die erste STA passiv Daten überträgt und der erste AP und/oder die erste STA Datensendung und -empfang auf Grundlage der Übertragung auf der zweite Verbindung einstellt.

5. Verfahren nach Anspruch 3 oder 4, wobei
der aktive/passive Modus der ersten Verbindung vom ersten AP und/oder der ersten STA gesteuert wird, und/oder der aktive/passive Modus der zweiten Verbindung vom zweiten AP und/oder der zweiten STA gesteuert wird.

6. Verfahren nach Anspruch 3 oder 4, wobei
der aktive/passive Modus der ersten Verbindung vom ersten AP gesteuert wird, der die erste STA über einen Auslöserahmen oder einen Verwaltungsrahmen anweist, und/oder der aktive/passive Modus der zweiten Verbindung vom zweiten AP gesteuert wird, der die zweite STA über einen Auslöserahmen oder einen Verwaltungsrahmen anweist.

7. Verfahren nach einem der Ansprüche 3 bis 5, wobei
der aktive/passive Modus der ersten Verbindung durch einen Wert einer Variablen in einem LL-TWT-SP-Modul im ersten AP angezeigt wird, wobei das LL-TWT-SP-Modul im ersten AP erstes Informationsfeld und/oder zweites Informationsfeld umfasst, wobei ein Wert einer Variablen im ersten Informationsfeld anzeigt, ob der aktive/passive Modus aktiviert werden soll, und ein Wert einer Variablen im zweiten Informationsfeld anzeigt, ob sich die erste Verbindung in dem aktiven Modus oder dem passiven Modus befindet.

8. Verfahren nach einem der Ansprüche 3 bis 6, wobei
der aktive/passive Modus der ersten Verbindung durch einen Wert einer Variablen in einem LL-TWT-SP-Modul im ersten STA angezeigt wird, wobei das LL-TWT-SP-Modul im ersten STA drittes Informationsfeld und/oder viertes Informationsfeld umfasst, wobei ein Wert einer Variablen im dritten Informationsfeld anzeigt, ob der aktive/passive Modus aktiviert werden soll, und ein Wert einer Variablen im vierten Informationsfeld anzeigt, ob sich die erste Verbindung in dem aktiven Modus oder dem passiven Modus befindet.

9. Verfahren nach einem der Ansprüche 3 bis 5, wobei
der aktive/passive Modus der zweiten Verbindung durch einen Wert einer Variablen in einem LL-TWT-SP-Modul im zweiten AP angezeigt wird, wobei das LL-TWT-SP-Modul im zweiten AP fünftes Informationsfeld und/oder sechstes Informationsfeld umfasst, wobei ein Wert einer Variablen im fünften Informationsfeld anzeigt, ob der aktive/passive Modus aktiviert werden soll, und ein Wert einer Variablen im sechsten Informationsfeld anzeigt, ob sich die zweite Verbindung in dem aktiven Modus oder dem passiven Modus befindet.

10. Verfahren nach einem der Ansprüche 3 bis 6, wobei
der aktive/passive Modus der zweiten Verbindung durch einen Wert einer Variablen in einem LL-TWT-SP-Modul in der zweiten STA angezeigt wird, wobei das LL-TWT-SP-Modul in der zweiten STA siebtes Informationsfeld und/oder achtes Informationsfeld umfasst, wobei ein Wert einer Variablen im siebten Informationsfeld anzeigt, ob der aktive/passive Modus aktiviert werden soll, und ein Wert einer Variablen im achten Informationsfeld anzeigt, ob sich die zweite Verbindung in dem aktiven Modus oder dem passiven Modus befindet.

11. Drahtloskommunikationsverfahren, angewendet in einer Access-Point-Multi-Link-Vorrichtung, AP MLD, umfassend mindestens einen ersten Access-Point, AP, und einen zweiten AP, wobei der erste AP eine erste Verbindung mit einer ersten Station, STA, in einer Non-Access-Point-Multi-Link-Vorrichtung, Non-AP MLD, herstellt, die dem ersten AP zugeordnet ist, und der zweite AP eine zweite Verbindung mit einer zweiten STA in dem Non-AP MLD herstellt;
das Verfahren umfassend:
Durchführen, durch die AP MLD, der Datenübertragung auf der ersten Verbindung und der zweiten Verbindung, wenn eine erste Low-Latency-Target-Wake-Time-Service-Period, LL TWT SP, auf der ersten Verbindung eingerichtet ist, **dadurch gekennzeichnet, dass**,
falls eine zweite LL TWT SP auf der zweiten Verbindung eingerichtet wird, sich die erste LL TWT SP und die zweite LL TWT SP vollständig in einer Zeitdomäne überlappen.

12. Verfahren nach Anspruch 11, wobei die zweite LL TWT SP auf der zweiten Verbindung eingerichtet ist, und die erste LL TWT SP und die zweite LL TWT SP, die sich vollständig in einer Zeitdomäne überlappen, Folgendes umfassen: die erste LL TWT SP und die zweite LL TWT-SP, die gleiche Startzeit und Endzeit aufweisen und den gleichen LL-TWT-Parameter aufweisen.

13. Stationsvorrichtung, die einen Prozessor (510) und einen Speicher (520) umfasst, wobei der Speicher (520) ein darauf gespeichertes Computerprogramm aufweist und der Prozessor (510) konfiguriert ist, das im Speicher (520) gespeicherte Computerprogramm aufzurufen und auszuführen, um das Verfahren nach einem der Ansprüche 1 bis 10 durchzuführen.

14. Zugangspunktvorrichtung, die einen Prozessor (510) und einen Speicher (520) umfasst, wobei der Speicher (520) ein darauf gespeichertes Computerprogramm aufweist und der Prozessor (510) konfiguriert ist, das im Speicher (520) gespeicherte Computerprogramm aufzurufen und auszuführen, um das Verfahren nach Anspruch 11 oder 12 durchzuführen.

15. Computerlesbares Speichermedium, **gekennzeichnet durch** Aufweisen eines darauf gespeicherten Computerprogramms, das einem Computer ermöglicht, das Verfahren nach einem der Ansprüche 1 bis 10 durchzuführen.

## Revendications

1. Procédé de communication sans fil, appliqué dans un dispositif multi-liaison sans point d'accès, MLD non-AP, comprenant au moins une première station, STA, et une seconde station, STA, la première STA formant une première liaison avec un premier point d'accès, AP, dans un dispositif multi-liaison avec point d'accès, MLD AP, associé à la première STA, et la seconde STA formant une seconde liaison avec un second point d'accès, AP, dans le MLD AP,
le procédé comprenant :
la réalisation (S210), par le MLD non-AP, de la transmission de données sur la première liaison et la seconde liaison, lorsqu'une première période de service de temps de réveil cible à faible latence, SP LL TWT, est établie sur la première liaison, **caractérisé en ce que**
dans un cas où une seconde SP LL TWT est établie sur la seconde liaison, la première SP LL TWT et la seconde SP LL TWT se chevauchent complètement dans un domaine temporel.

2. Procédé selon la revendication 1, dans lequel la seconde SP LL TWT est établie sur la seconde liaison, et la première SP LL TWT et la seconde SP LL TWT se chevauchant complètement dans le domaine temporel comprend : la première SP LL TWT et la seconde SP LL TWT ayant la même heure de début et la même heure de fin et présentant un même paramètre LL TWT.

3. Procédé selon la revendication 1, dans lequel
dans le cas où la seconde SP LL TWT est établie sur la seconde liaison, ladite réalisation (S210), par le MLD non-AP, de la transmission de données sur la première liaison et la seconde liaison comprend :
la réalisation, par le MLD non-AP lorsque la première et la seconde liaison du MLD non-AP appartiennent à une paire de liaisons de transmission et réception non simultanées, NSTR, de la transmission de données sur la première et la seconde liaison sur la base d'un mode actif/passif sur la première liaison et la seconde liaison.

4. Procédé selon la revendication 3, dans lequel dans le cas où la seconde SP LL TWT est établie sur la seconde liaison :
dans une région où la seconde SP LL TWT chevauche complètement la première SP LL TWT dans le domaine temporel, lorsque la première liaison est en mode actif et la seconde liaison est en mode passif, le second AP et/ou la seconde STA transmet passivement des données, et le second AP et/ou la seconde STA effectue passivement une transmission synchrone ou cesse la transmission-réception de données sur la base de la transmission sur la première liaison ; ou
dans une région où la première SP LL TWT chevauche complètement la seconde SP LL TWT dans le domaine temporel, lorsque la première liaison est en mode passif et la seconde liaison est en mode actif, le premier AP et/ou la première STA transmet passivement des données, et le premier AP et/ou la première STA effectue passivement une transmission synchrone ou cesse la transmission-réception de données sur la base de la transmission sur la seconde liaison.

5. Procédé selon la revendication 3 ou 4, dans lequel
le mode actif/passif de la première liaison est contrôlé par le premier AP et/ou la première STA, et/ou le mode actif/passif de la seconde liaison est contrôlé par le second PA et/ou la seconde STA.

6. Procédé selon la revendication 3 ou 4, dans lequel
le mode actif/passif de la première liaison est contrôlé par le premier AP qui donne des instructions à la première STA via une trame de déclenchement ou une trame de gestion et/ou le mode actif/passif de la seconde liaison est contrôlé par le second AP qui donne des instructions à la seconde STA via une trame de déclenchement ou une trame de gestion.

7. Procédé selon l'une quelconque des revendications 3 à 5, dans lequel
le mode actif/passif de la première liaison est indiqué par une valeur d'une variable dans un module SP LL TWT du premier AP, dans lequel le module SP LL TWT du premier AP comprend un premier champ d'information et/ou deuxième champ d'information, une valeur d'une variable dans le premier champ d'information indique s'il faut activer le mode actif/passif, et une valeur d'une variable dans le deuxième champ d'information indique si la première liaison est en mode actif ou en mode passif.

8. Procédé selon l'une quelconque des revendications 3 à 6, dans lequel
le mode actif/passif de la première liaison est indiqué par une valeur d'une variable dans un module SP LL TWT SP de la première STA, dans lequel le module SP LL TWT de la première STA comprend un troisième champ d'information et/ou un quatrième champ d'information, une valeur d'une variable dans le troisième champ d'information indique s'il faut activer le mode actif/passif, et une valeur d'une variable dans le quatrième champ d'information indique si la première liaison est en mode actif ou en mode passif.

9. Procédé selon l'une quelconque des revendications 3 à 5, dans lequel
le mode actif/passif de la seconde liaison est indiqué par une valeur d'une variable dans un module SP LL TWT du second AP, dans lequel le module SP LL TWT du second AP comprend un cinquième champ d'information et/ou sixième champ d'information, une valeur d'une variable dans le cinquième champ d'information indique s'il faut activer le mode actif/passif, et une valeur d'une variable dans le sixième champ d'information indique si la seconde liaison est en mode actif ou en mode passif.

10. Procédé selon l'une quelconque des revendications 3 à 6, dans lequel
le mode actif/passif de la seconde liaison est indiqué par une valeur d'une variable dans un module SP LL TWT de la seconde STA, dans lequel le module SP LL TWT de la seconde STA comprend un septième champ d'information et/ou huitième champ d'information, une valeur d'une variable dans le septième champ d'information indique s'il faut activer le mode actif/passif, et une valeur d'une variable dans le huitième champ d'information indique si la seconde liaison est en mode actif ou en mode passif.

11. Procédé de communication sans fil, appliqué dans un dispositif multi-liaison avec point d'accès, MLD AP, comprenant au moins un premier point d'accès, AP, et un second AP, le premier AP formant une première liaison avec une première station, STA, dans un dispositif multi-liaison sans point d'accès, MLD non-AP, associé au premier AP, et le second AP formant une seconde liaison avec une seconde STA dans le MLD non-AP ;
le procédé comprenant :
la réalisation, par le MLD AP, de la transmission de données sur la première liaison et la seconde liaison lorsqu'une première période de service de temps de réveil cible à faible latence, SP LL TWT, est établie sur la première liaison, **caractérisé en ce que**
dans un cas où une seconde SP LL TWT est établie sur la seconde liaison, la première SP LL TWT et la seconde SP LL TWT se chevauchent complètement dans un domaine temporel.

12. Procédé selon la revendication 11, dans lequel la seconde SP LL TWT est établie sur la seconde liaison, et la première SP LL TWT et la seconde SP LL TWT se chevauchant complètement dans un domaine temporel comprend : la première SP LL TWT et la seconde SP LL TWT ayant la même heure de début et la même heure de fin et présentant un même paramètre LL TWT.

13. Dispositif de station, comprenant un processeur (510) et une mémoire (520), dans lequel la mémoire (520) contient un programme informatique, et le processeur (510) est configuré pour invoquer et exécuter le programme informatique stocké dans la mémoire (520) afin d'effectuer le procédé selon l'une quelconque des revendications 1 à 10.

14. Dispositif de point d'accès, comprenant un processeur (510) et une mémoire (520), dans lequel la mémoire (520) contient un programme informatique, et le processeur (510) est configuré pour invoquer et exécuter le programme informatique stocké dans la mémoire (520) afin d'effectuer le procédé selon la revendication 11 ou 12.

15. Support de stockage lisible par ordinateur, **caractérisé par** la présence d'un programme informatique qui permet à un ordinateur d'effectuer le procédé selon l'une quelconque des revendications 1 à 10.
